# EUROPEAN PATENT SPECIFICATION

(11) **EP 3 074 824 B1**
(45) Date of publication and mention of the grant of the patent: **15.05.2019**
(21) Application number: 14865286.0
(22) Date of filing: 27.11.2014
(51) Int. Cl.: G05B 17/02, G05B 23/02, G06N 7/00, G05B 13/04

(54) **METHOD AND SYSTEM FOR ARTIFICIALLY INTELLIGENT MODEL-BASED CONTROL OF DYNAMIC PROCESSES USING PROBABILISTIC AGENTS**
VERFAHREN UND SYSTEM FÜR AUF KÜNSTLICHER INTELLIGENZ UND MODELL BASIERTER STEUERUNG DYNAMISCHER PROZESSE MITTELS PROBABILISTISCHER AGENTEN
PROCÉDÉ ET SYSTÈME DE COMMANDE DE PROCESSUS DYNAMIQUES UTILISANT DES AGENTS PROBABILISTES BASÉE SUR UN MODÈLE ET DE L'INTELLIGENCE ARTIFICIELLE

(30) Priority: 27.11.2013 US 201314092803; 27.11.2013 CA 2835505
(43) Date of publication of application: 05.10.2016
(73) Proprietor: Adept AI Systems Inc., Acheson CA T7X 547 (US)
(72) Inventor: WATSON, Jeff, Edmonton, Alberta T6R 3T7 (CA)
(74) Representative: Appleyard Lees IP LLP
(86) International application number: PCT/CA2014/051139
(87) International publication number: WO 2015/077890

(56) References cited:
- US-A- 5 566 092
- US-A- 5 566 092
- US-A1- 2010 228 398
- US-A1- 2010 228 398
- US-A1- 2012 304 007
- US-A1- 2012 304 007
- US-B1- 7 720 779
- US-B1- 7 720 779

## Description

### FIELD

Embodiments taught herein relate generally to methods and apparatus for controlling complex equipment and dynamic processes and, more particularly, to methods and apparatus for controlling said equipment and processes with greater certainty for decision making during the controlling hereof.

### BACKGROUND

Complex industrial equipment is often critical to production operations with significant upstream and downstream effects, and may cause significant issues in the event of performance losses or equipment failure. Sensor and equipment failures, sensor calibration drift, varying process parameters and changes or disturbances in operating conditions or environment can all contribute to production problems and losses.

The fusion of sensors, equipment and dynamic processes, some of which cannot be measured cost effectively or at all, make it very difficult for production operations to identify, let alone remediate equipment and production problems. As a consequence, many companies require skilled operators or contractors to observe and identify problems and determine which actions or solutions to implement. Often sufficient information is not available on a timely basis, however decisions are still required.

Traditionally advanced control systems use defined models or processes to correct for process variations or disturbances. It can often be difficult, or not possible at all, to accurately determine, anticipate or identify the causality of variations or disturbances. Determining the best possible course of action under these circumstances is even more difficult especially when control action based on incorrect diagnosis can place the process or the product at risk.

The academic publication entitled "Agile Software Development with Scrum," by Ken Schwaber and Mike Beedle, (2002) Upper Saddle River: Prentice Hall, p. 25, ISBN 0-13-067634-9, teaches that "the defined process control model requires that every piece of work be completely understood. Given a well-defined set of inputs, the same outputs are generated every time. A defined process can be started and allowed to run until completion, with the same results every time", said reference being retrieved by Wikipedia on July 06, 2007, and located under the topic Decision_process, under note-1.

Model predictive control techniques typically require the nature of disturbances to be known in advance in order to provide control direction to bring the process back within its normal operating envelope. Such techniques also require the parameters of the model to be accurately tuned such that inputs to the model generate accurate and relevant outputs. Such applications require significant upkeep by highly skilled and knowledgeable individuals unless they are highly stable.

Such advanced control techniques are typically addressed with an exhaustive set of logical or knowledge based rules that are used to try and identify, with certainty, what the cause is for such disturbances and the best course of action to implement. Multiple contributions to an observable problem can create sufficient uncertainty that these systems cannot perform or there are simply too many variations to exhaustively catalog. In addition, the computational requirements to diagnose and determine appropriate corrective action can interfere with the performance of time sensitive process monitoring and control.

Hardware and software platforms are known for identifying and prioritizing real time control actions while executing advanced Artificial Intelligence (AI) methods that enable diagnostics and decision making in uncertain conditions.

Pattern recognition is a common feature in artificial intelligence and machine learning applications. In general it is used to assign a label or classification to a given input value by performing "most likely" matching of the inputs, taking into account their statistical variation. Pattern recognition is thus different to pattern matching which, instead, looks for exact matches in the data input with pre-existing pattern(s). An intelligent monitoring system and method are disclosed in US Patent No. 7,818,276 to Veillette*.*

Pattern recognition is a technique typically devoid of a true understanding of the physical data. Relying solely on pattern recognition to classify a variation or a disturbance to a process, for forming the basis of a control action, is akin to taking a blind, and often times un-acceptable risk.

There is a need for apparatus and methods for controlling dynamic processes such that sufficient confidence and certainty in the process state exists so that automated control action can be taken with acceptable levels of risk.

US5,566,092 Wang et al describes a machine fault diagnosis system of the background art. US7,720,779 Perry et al describes an extensible Bayesian network editor with inferencing capabilities. US2010/0,228,398 Powers et al describes a system for remotely monitoring and controlling pump jacks.

### SUMMARY

According to the present invention there is provided a method according to claim 1, or a system as in claim 10. Additional features will be apparent from the dependent claims, and the discussion herein.

Embodiments taught herein utilize an artificially intelligent model-based controller (AIMC) system to undertake an analytic validation of the results of a classification by an intelligent agent and combine that with other observations of process variables to establish, as deterministically as possible, the diagnosis of the process state and its underlying causes such that sufficient confidence in the process state exists so automated control action can be taken with acceptable levels of risk of, e.g., process disruption or failure.

By way of introduction, in one aspect there is described a method for controlling the process of at least one device. The method comprises: receiving real time process data generated from the process; processing the real time process data, and comparing the processed data against at least one of a predictive objective function, a historical mean, a predicted operational envelope and a predetermined static function for establishing any deviation from normal operation; applying probabilistic modeling for classifying a source and likely cause of the deviation; prioritizing actuation of at least one or more diagnoses related to causality of the deviation; modifying the probabilistic model based on the results of the one or more diagnoses; and applying the modified probabilistic model for initiating at least one control action to the process for adjusting the process in response to the deviation.

In one embodiment, the method further comprises: applying the modified probabilistic model for evaluating risk of the at least one control action causing process disruption.

In another embodiment, prioritizing actuation of at least one or more diagnoses further comprises: pattern matching to perform a probabilistic match to known patterns; and classifying which of the one or more diagnoses are initially activated.

In another embodiment, the method further comprises: prior to initiating the at least one control action, optimizing the at least one control action.

In another embodiment, the probabilistic model is a Probabilistic Graphical Network.

In another embodiment, the probabilistic model is a Bayesian Network.

According to another aspect of the disclosure, a method is provided for controlling a process of at least one device. The method comprises: at a data and modeling agent, comparing real time data to at least one of a statistical profile of the process, a historical profile of the process, and a simulated profile of the process, said comparing taking into account operational variance and thereby identifying deviations; at a status agent, tracking the progress and the specific states of the process; at a supervisory manager, classifying one or more diagnostic agents relevant to the deviations for conducting probabilistic diagnostic tests, said diagnostic agents comprising causal process-specific Probabilistic Graphical Networks; at the supervisory manager, triggering the classified diagnostic agents for identifying probable causes for the deviation and their likelihood, and receiving the probabilistic diagnoses; at the supervisory manager, comparing the probabilistic diagnoses of the various diagnostic agents and updating the status agent of the diagnosis of high certainty, or if sufficiently uncertain to differentiate a likely cause, initiating additional diagnostic tests; and at a control agent, assessing opportunity and risk of control action based on the probability of one or more diagnoses and initiating at least one control action to the process based on said assessment.

According to another aspect of the disclosure, a system is provided for controlling the process of at least one device in the system. The system comprises: a plurality of sensors for collecting data of the process; a status agent for monitoring the status of the system based on data collected from the sensors; at least one diagnostic agent for diagnosing at least a portion of the system and collecting diagnostic data from the sensors to identify deviation from normal operation; a control agent for performing control actions to the process; and a supervisory manager coupling to the status agent, the at least one diagnostic agent and the control agent for: receiving real time process data generated from the process; comparing against a predictive objective function and/or a historical mean and/or a predicted operational envelope and/or a predetermined static function for establishing any deviation from normal operation; applying probabilistic modeling at the status agent for classifying the source and likely cause of the deviation; prioritizing actuation of the at least one diagnostic agent related to causality of the deviation; modifying the probabilistic model of the status agent from the results from the at least one diagnostic agent; and applying a probabilistic model at a control agent for evaluating risk and applying control action to the at least one device to adjust the process.

In one embodiment, the one or more diagnostic agents are sub-agents of an encompassing diagnostic agent.

In another embodiment, each of the agents can operate individually as separate agents, or as a sub-agent of an encompassing agent.

In another embodiment, the encompassing agent is an object-oriented Bayesian Network.

In another embodiment, the at least one device comprises at least one pumpjack.

In another embodiment, the at least one device comprises at least one of steam methane reformer, boiler, heat treatment furnace, water treatment equipment, and compressor skid.

In another embodiment, the system is distributed in a plurality of jobsites for controlling the devices thereon.

According to another aspect of the disclosure, a system is provided for controlling the process of at least one device in the system, said system comprising: a plurality of sensors for collecting data of the process; and at least one computing device having a plurality of agents for analyzing data collected from the sensors, modifying a model of the process based on said analysis, and initiating control actions to the process, based on said modified process model, for adjusting the process, wherein a first one of said agents utilizes a Probabilistic Graphical Model to identify at least one parameter for modifying the process model.

In one embodiment, the Probabilistic Graphical Model is a Bayesian Network.

In another embodiment, a second one of said agents monitors the status of the system based on data collected from the sensors.

In another embodiment, at least a third one of said agents diagnoses at least a portion of the system and collecting diagnostic data from the sensors to identify deviation from normal operation.

In another embodiment, at least a fourth one of said agents performs the control actions to adjust the process.

In another embodiment, at least a fifth one of said agents optimizes the control actions to be applied to the process; a sixth one of said agents establishes and maintains a process model for the system operation, and identifies deviation of the process from normal operation; and a seventh one of said agents is a supervisory manager for managing said agents.

In another embodiment, the at least one device comprises one or more pumpjacks.

According to another aspect of the disclosure, a system is provided for controlling the process of at least one device in the system. The system comprises: a plurality of sensors for collecting data of the process; and at least one computing device having a plurality of agents for analyzing data collected from the sensors, modifying a model of the process based on said analysis, and initiating control actions to the process, based on said modified process model, for adjusting the process, wherein at least one of said agents utilizes Probabilistic Graphical Models for identifying an optimization strategy for determining the control actions for adjusting the process, and identifying numerical search regions of parameters to be optimized according to the optimization strategy; and conducting a numerical optimization to search for an optimum of said parameters.

In one embodiment, said optimum is a global optimum.

In one embodiment, said optimum is a best fit local optimum in said numerical search regions.

In one embodiment, the Probabilistic Graphical Model is a Bayesian Network.

In one embodiment, a second one of said agents monitors the status of the system based on data collected from the sensors.

In one embodiment, at least a third one of said agents diagnoses at least a portion of the system and collecting diagnostic data from the sensors to identify deviation from normal operation.

In one embodiment, at least a fourth one of said agents performs control actions to the process.

In one embodiment, at least a fifth one of said agents identifies at least one parameter for modifying the process model; a sixth one of said agents establishes and maintains a process model for the system operation, and identifies deviation of the process from normal operation; and a seventh one of said agents manages said agents.

In one embodiment, the at least one device comprises at least one pumpjack.

### BRIEF DESCRIPTION OF THE DRAWINGS

Figure 1 is a hardware diagram illustrating an artificially intelligent model-based controller (AIMC) system for establishing real time monitoring, network communications and process control whether they be local, remote or a combination thereof;
Figure 2 is the software structure of the AIMC system of Fig. 1 illustrating an embodiment of a hierarchical structure of an Intelligent Agent (IA) network having several types of intelligent agents for control and optimization of an apparatus and process, in the context of a sucker rod pump controller for oil wells;
Figure 3 shows a flowchart of data processing in the Data and Modeling Agent of the AIMC system of Fig. 1;
Figure 4 shows a flowchart of data processing in the Status Agent of the AIMC system of Fig. 1;
Figure 5 shows a flowchart of data processing in the Diagnostic Agent of the AIMC system of Fig. 1;
Figure 6 shows a flowchart of data processing in the Control Strategy Agent of the AIMC system of Fig. 1;
Figure 7 shows a flowchart of data processing in the Optimization Agent of the AIMC system of Fig. 1;
Figure 8 shows the function diagram of the Data and Modeling Agent of the AIMC system of Fig. 1;
Figure 9 shows the function diagram of the Status Agent of the AIMC system of Fig. 1;
Figure 10 shows the function diagram of the Diagnostic Agent of the AIMC system of Fig. 1;
Figure 11 shows the function diagram of the Model/Parameter Tuning Agent;

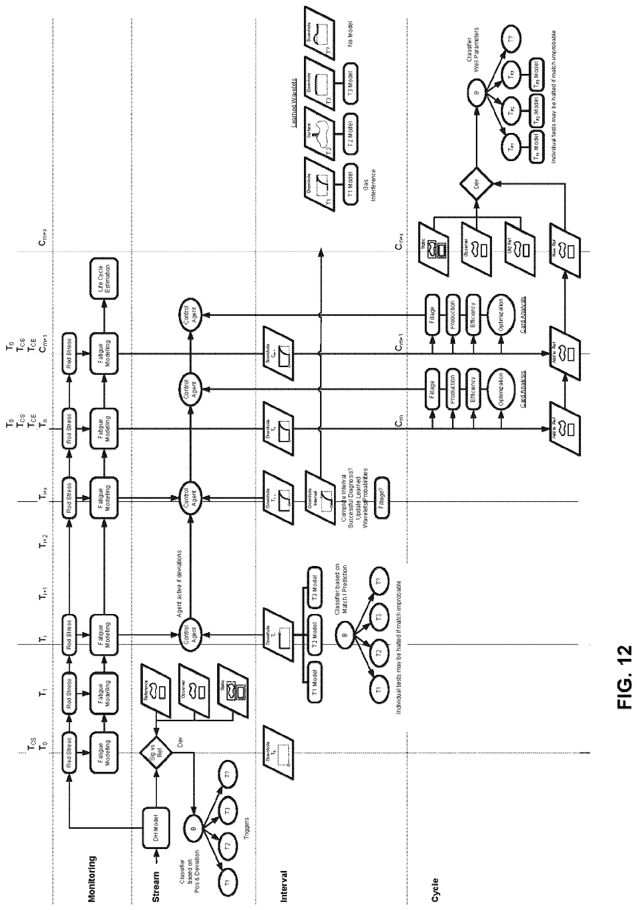

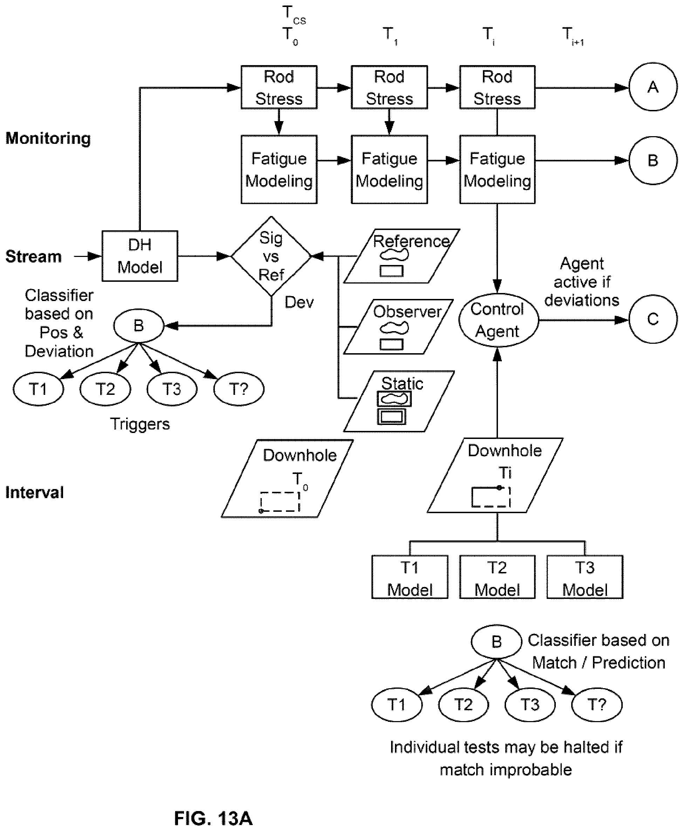

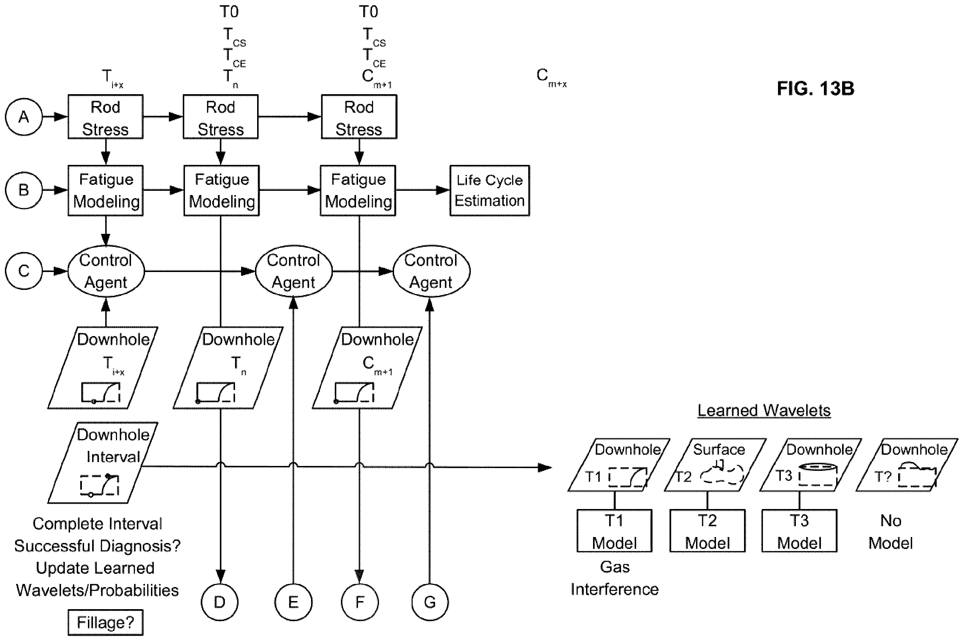

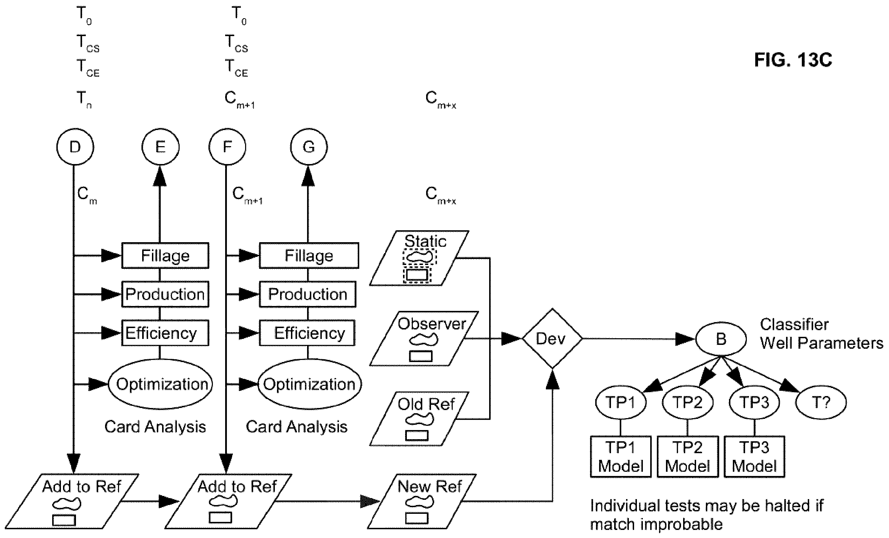

Figure 12 is a complete timing diagram, and Figures 13A to 13C are close up representations of the complete diagram, said diagram illustrating implementation with a cyclic pumping process wherein the supervisory agent is monitoring the streamed data from the process at time increments (Fig. 13A) intermediate a cycle and performing testing, probabilistic classification for recruiting appropriate Control Agents as necessary, learning and updating agents (Fig. 13B) and further monitoring the cycle as a whole (Fig. 13B and 13C) classifying the results on a probabilistic basis to intelligently control the cycle and manage deviations;
Figure 14 shows the AI Manager of the AIMC system of Fig. 1, the AI Manager controlling the lAs for conducting probabilistic analysis to determine the causality of deviation, prioritizing and selecting likely diagnostic agents based on process parameters, learning from solutions, updating models and issuing control instructions based on acceptable risk of, e.g., process disruption or failure;
Figures 15 to 24 illustrate an industrial embodiment of the system and methodology, specifically in the context of an oil well and pumpjack process.

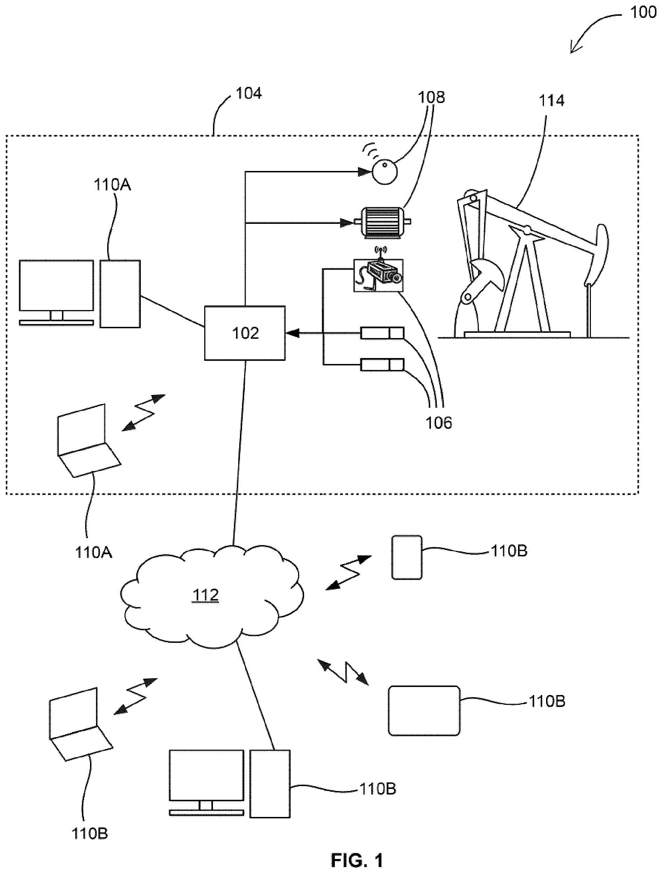

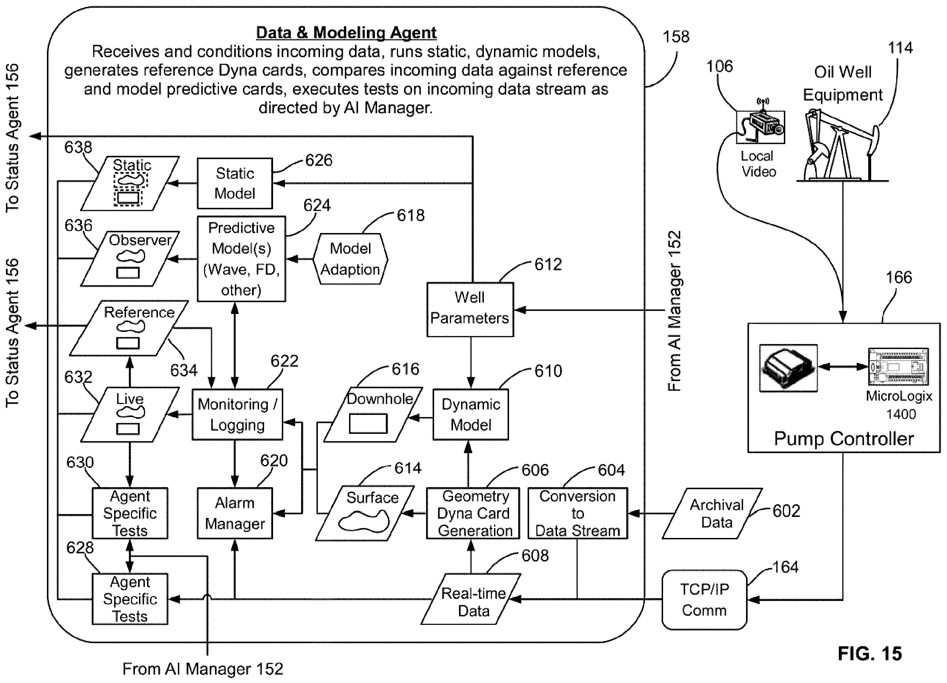

Figure 15 shows the detail of the Data and Modeling Agent of the AIMC system of Fig. 1;

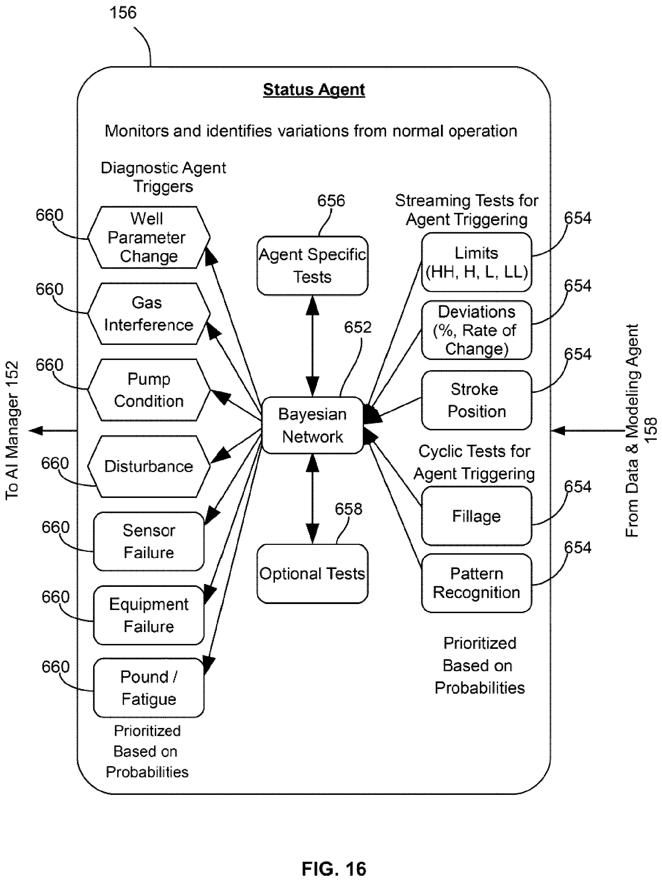

Figure 16 shows the detail of the Status Agent of the AIMC system of Fig. 1;

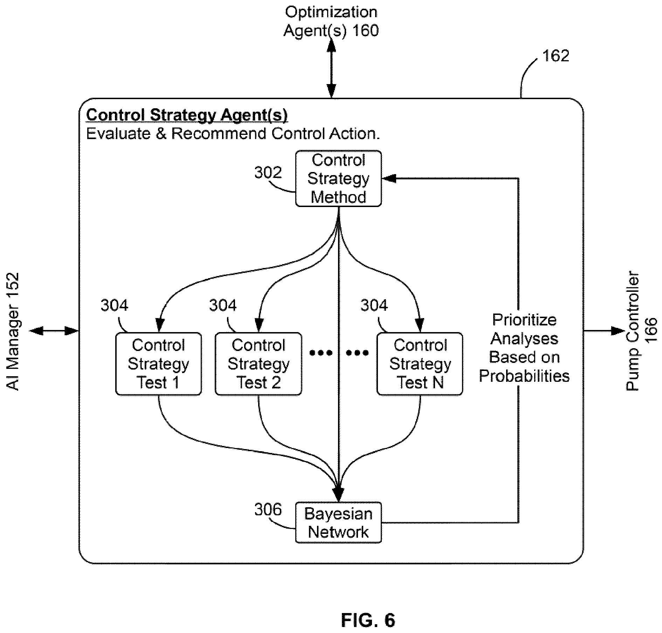

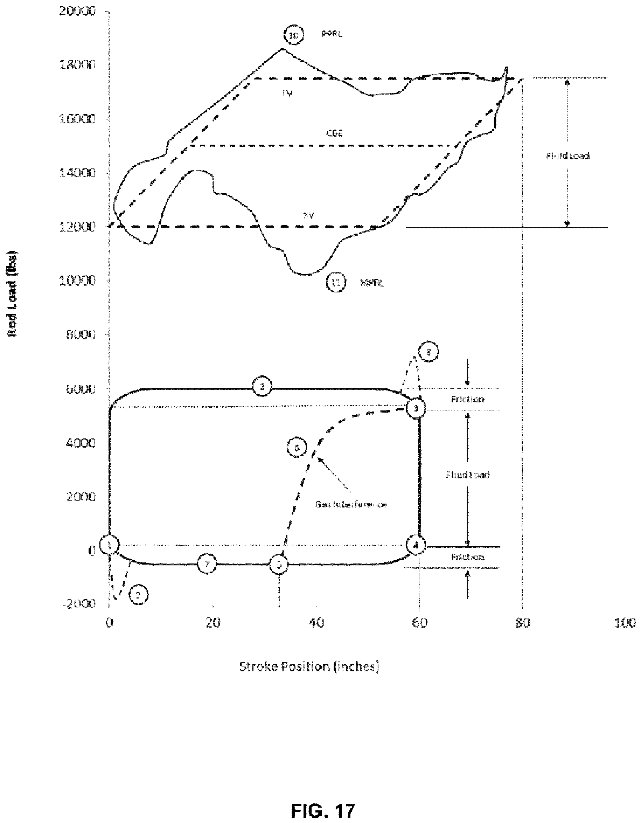

Figure 17 is a diagrammatic representation of an ideal pump cycle, a known diagnostic for gas interference, and an observed pump cycle, the system conducting a determination, by probabilistic graphical model(s) (PGM), of the state of the cycle of the pump and the likelihood that the gas interference agent (Fig. 6, 6-3) should be invoked;

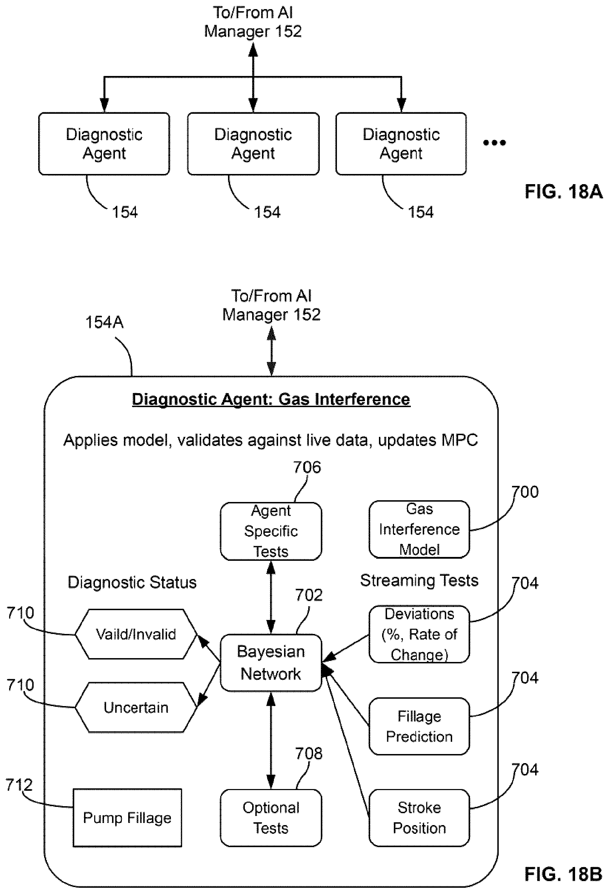

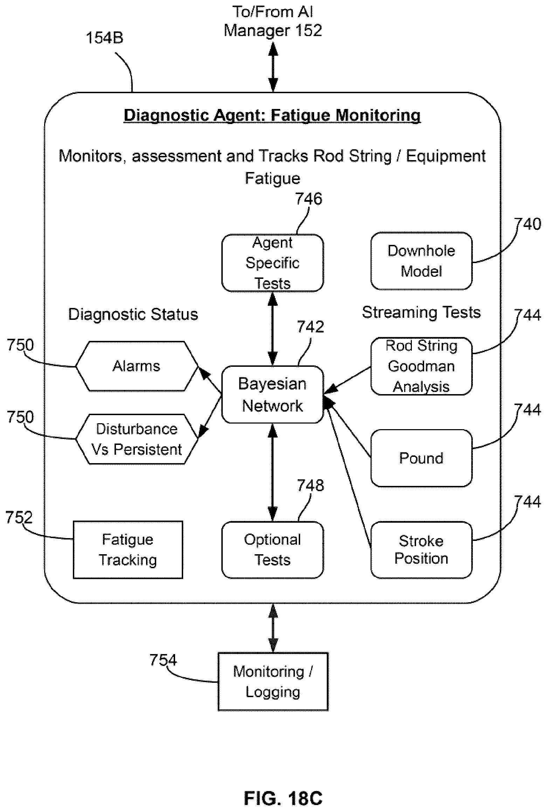

Figure 18A is a flow diagram of optional and possible Diagnostic Agents that could be recruited upon the identification of any potential variation or deviation from normal or predicted operation in a pump operation such as an external disturbance or a change in process conditions or parameters as determined by a Status Agent of Fig. 1, Agents for gas interference (Fig. 18B), rod fatigue monitoring (Fig. 18C) and well parameters (Fig .18D) being shown, each Agent also able to select through a probabilistic determination which tests and known actors might be at play;

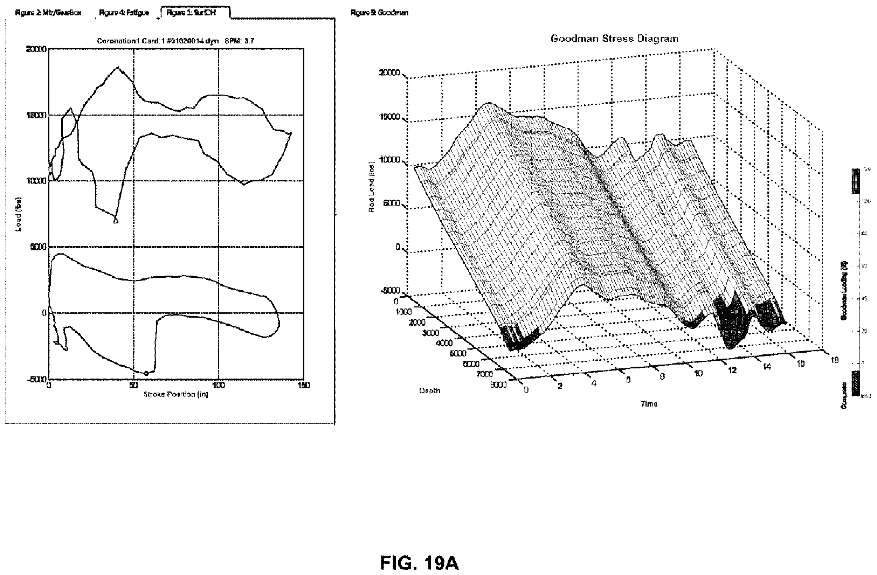

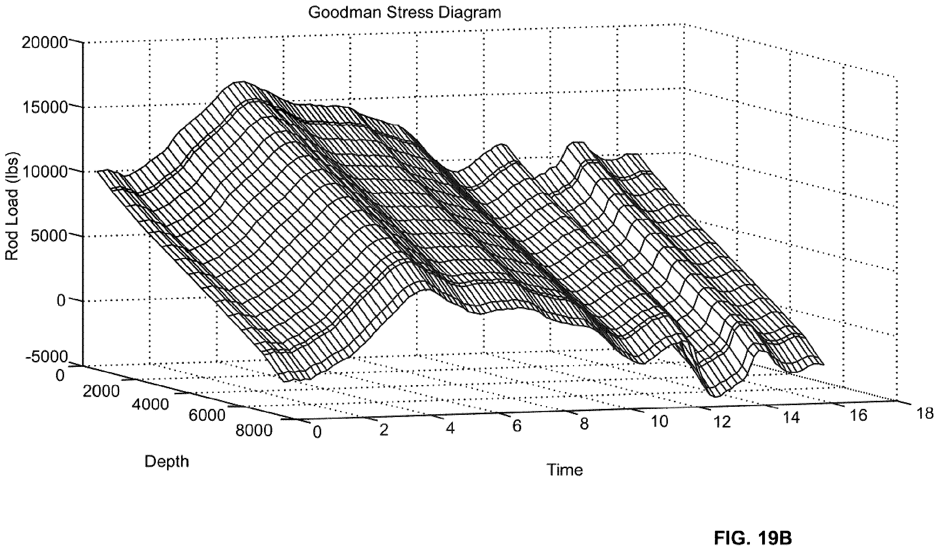

Figures 19A and 19B illustrate three-dimensional (3D) plots of the forces on a rod string over the entire cycle, wherein Fig. 19A shows colorized Goodman Stress Diagram showing the Goodman loading for each section of the rod string throughout the cycle enabling a user to easily identify where in the stroke the rod string is being overstressed, and Fig. 19B shows a non-colorized version of the Goodman Stress Diagram of Fig. 19A;

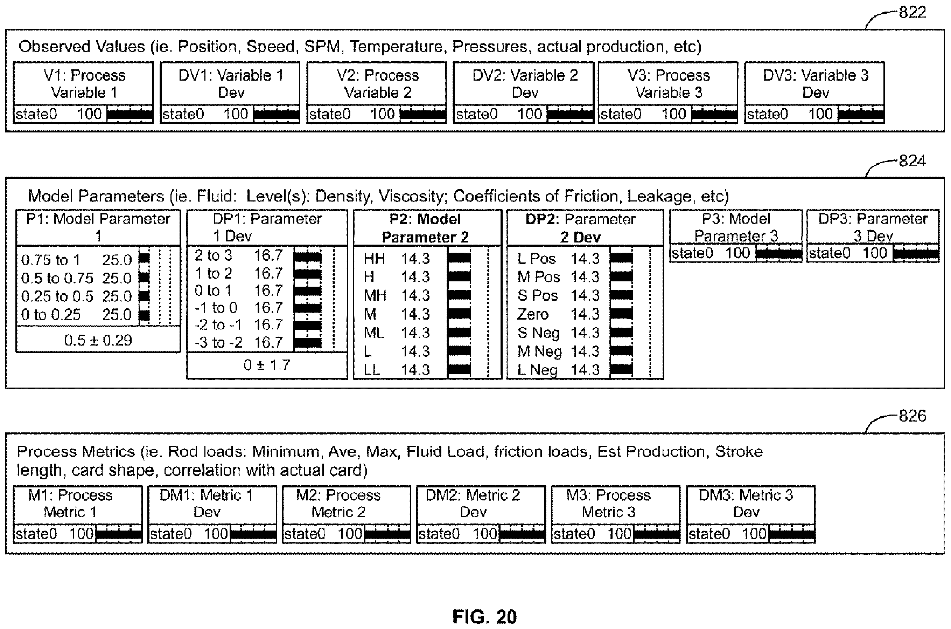

Figure 20 is a diagrammatic representation of a grouping of a variety of nodes that could be used to represent values in the process, model and metrics according to the pump embodiment of Fig. 1;

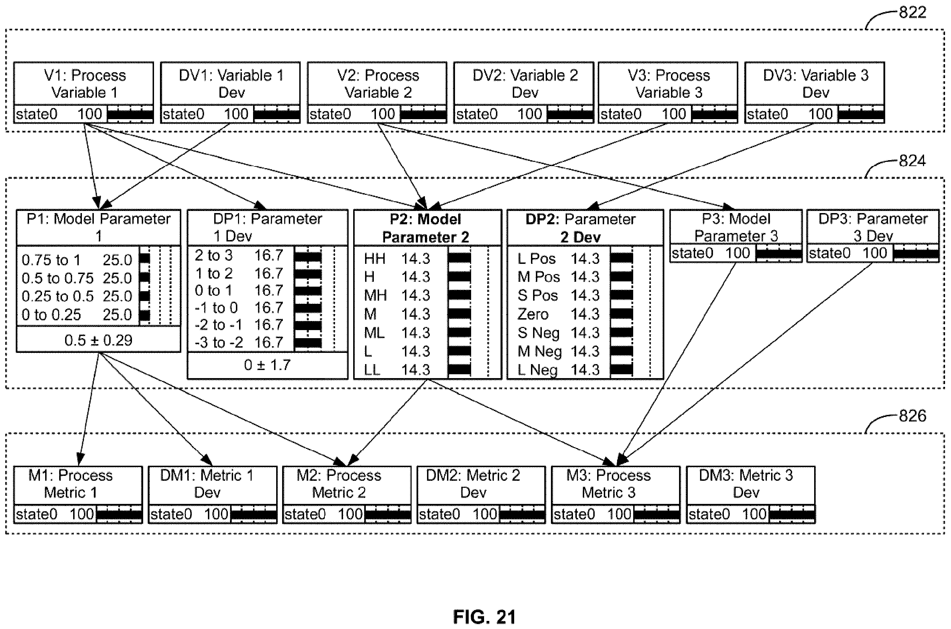

Figure 21 illustrates the learning of a structure resulting from the combining of first and second components to provide a causal Probabilistic Graphical Model;

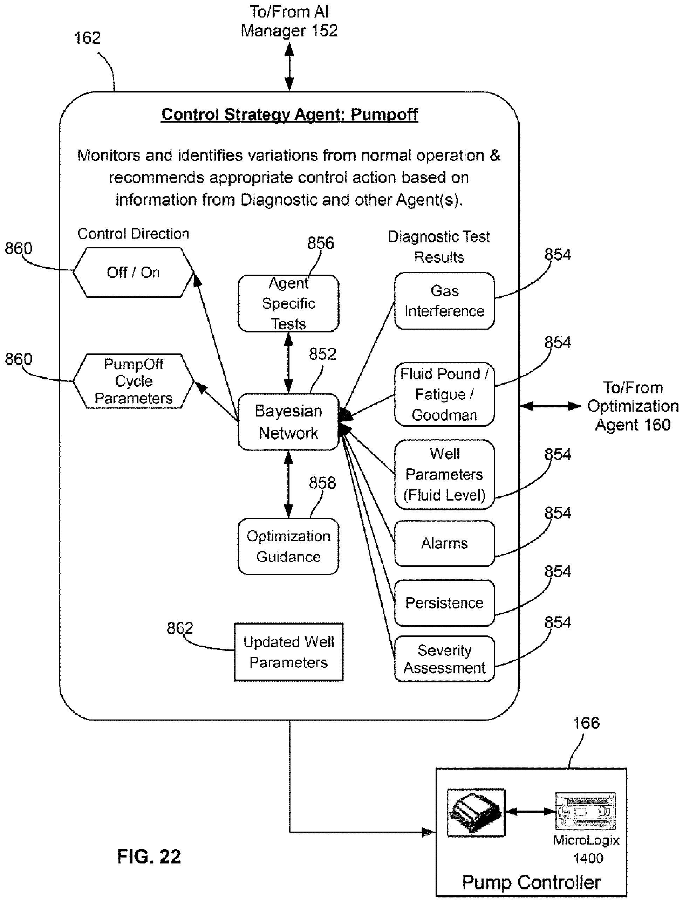

Figure 22 shows the detail of the Control Agent of the AIMC system of Fig. 1 for controlling the pumpoff cycles of sucker rod pump, the Control Agent evaluating, establishing risk of specified actions causing process disruption or failure, and recommending appropriate control action based on diagnostic results and further input from Optimization and Diagnostic Agent(s) for possible optimization opportunities prior to the precise control action to be taken;

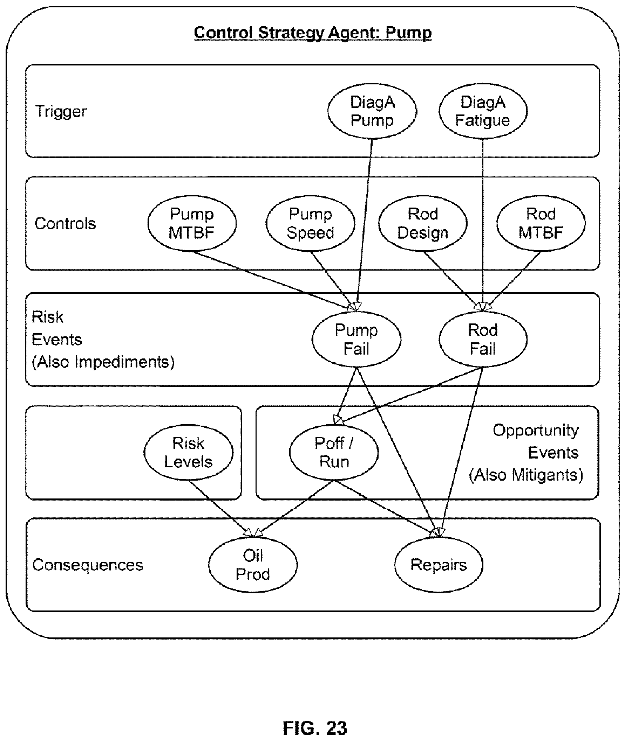

Figure 23 is a diagrammatic representation of a possible configuration for a Probabilistic Graphical Network for the pump embodiment of Fig. 1, namely using probabilistic methods for determining causality and implementing control actions given the means for control, risk and consequences of the actions including objectives to optimize performance balanced with considerations to opposing objectives; and

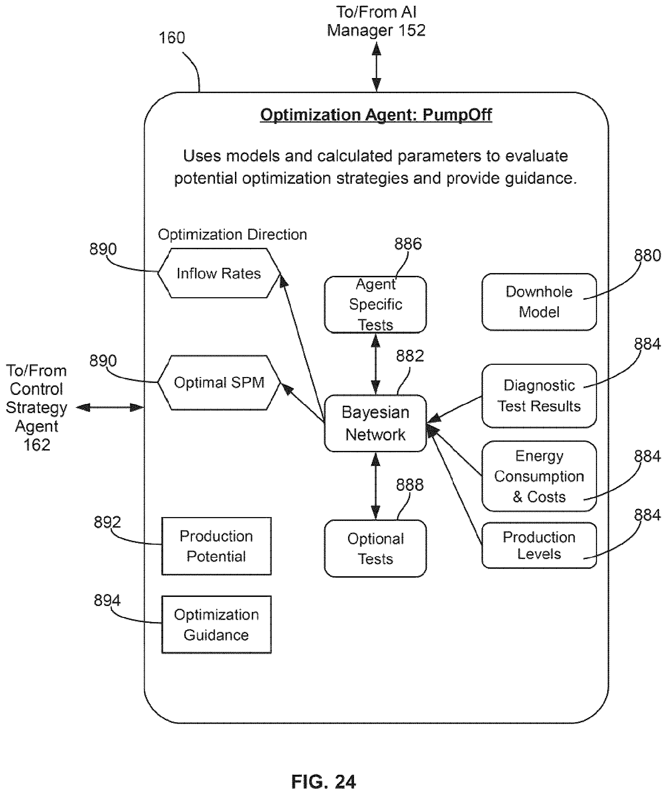

Figure 24 shows the detail of the Optimization Agent of the AIMC system of Fig. 1 for collaborating with the Control Agent to control the pumpoff cycles of sucker rod pump.

### DETAILED DESCRIPTION OF THE PREFERRED EMBODIMENTS

Embodiments disclosed herein utilize an artificially intelligent model-based controller (AIMC) system to monitor the operation process of one or more devices or equipment, undertake an analytic validation of the results of a classification by an intelligent agent, and to adjust the process. The analytic validation is combined with other observations of process variables to establish, as deterministically as possible, the diagnosis of the process state and its underlying causes such that sufficient confidence in the process state exists, so automated control actions can be taken with acceptable levels of risk of, e.g., process disruption or failure. Hereinafter, the term "as deterministically as possible" means that the established diagnosis is deterministic to a suitable extent to meet a design requirement, e.g., automated control actions with acceptable levels of risk of, e.g., process disruption or failure.

### System Structure

Having reference to Fig. 1, according to one embodiment, an artificially intelligent model-based controller (AIMC) system is shown for controlling one or more devices or equipment, such as a pumpjack, and is generally identified by reference numeral 100. As shown, the system 100 comprises a controller 102 installed on the jobsite 104 of the oil well. The controller 102 may be implemented in a general purpose computer programmed with appropriate software, firmware, a microcontroller, a microprocessor or a plurality of microprocessors, a digital signal processor or other hardware or combination of hardware and software using methods known to those skilled in the art. The controller 102 may alternatively be implemented using one or more industrial controlling devices, which are generally computing devices designed for specific purposes or uses.

The controller 102 communicates with a plurality of sensors 106 installed on various devices such as the pumpjack 114, tubing string, casing, sucker rod (not shown) and the like, on the ground or in the wellbore of the oil well, for collecting data regarding the oil well and devices, e.g., crank speed, rod stress, downhole temperature and pressure, fluid level and the like. Those skilled in the art appreciate that, in various embodiments, the system 100 may comprises various sensors and collect various data as required. The particular sensors and data collected are generally dependent on the system design and implementation.

The controller 102 also communicates with a plurality of action devices 108 such as variable speed motors, AC or DC variable speed drive such as an ABE ACS-601 (ABE Industry Oy, Helsinki, Finland) or Allen-Bradley 1336 Impact drive (Rockwell Automation, Milwaukee, Wis., USA), dynamic brake, alarm, and the like, for controlling the operation of devices of the oil well, in accordance with predefined rules, e.g., a crank speed profile for controlling crank speed, and/or in response to data collected from sensors 106.

The system 100 further comprises one or more computing devices 110A and 110B, collectively denoted herein as computing devices 110. As those skilled in the art appreciate, each computing device 110 may comprise a processor, a storage such as Read-Only Memory (ROM), volatile and/or non-volatile Random Access Memory (RAM), solid state drive, hard drive, or the like, a network module, and other components, all connected to the processor via one or more signal buses.

Some computing devices 110A may be deployed in the jobsite 104 of the oil well and connect to the controller 102 via suitable wired or wireless means such as direct cable connection, a local area network (LAN), Ethernet, WiFi®, Bluetooth®, Zigbee®, or the like. Some other computing devices 110B may be deployed remote to the oil well, and are connected to the controller through a network 112, such as a wide area network (WAN), the Internet, a telephone network, a cable network or satellite, via proper wired or wireless means. Those skilled in the art appreciate that, depending on the system design and implementation, the one or more computing devices 110 may be desktop computers, laptop computers, server computers, tablets, smart phones, Personal Digital Assistants (PDAs) or the like.

Although not shown in Fig. 1, the system 100 may also comprise computing devices designed for specific uses or purposes such as implementing suitable industrial controlling devices.

In this embodiment, the AIMC system 100 exploits the Probabilistic Graphical Networks (PGNs), such as Bayesian networks, and time series pattern recognition techniques and the like, to structure and evaluate the classification and diagnosis of the current state of the operation process of one or more devices by utilizing process variables, states and the outcomes of tests including relevant analytical models of processes, process sub systems or disturbances to validate the likelihood of the various classifications. From the software point of view, the AIMC system 100 comprises a network of Intelligent Agents (lAs) or agents, each being a software module performing a predetermined scope of analysis and managed by a central agent denoted as the AI Manager. The AIMC system integrates one or more process models and model predictive control techniques in conjunction with multiple lAs. Each IA performs, directs and prioritizes specialized analysis, diagnosis and control direction utilizing probabilistic reasoning methods such as probabilistic graphical models or Bayesian Networks.

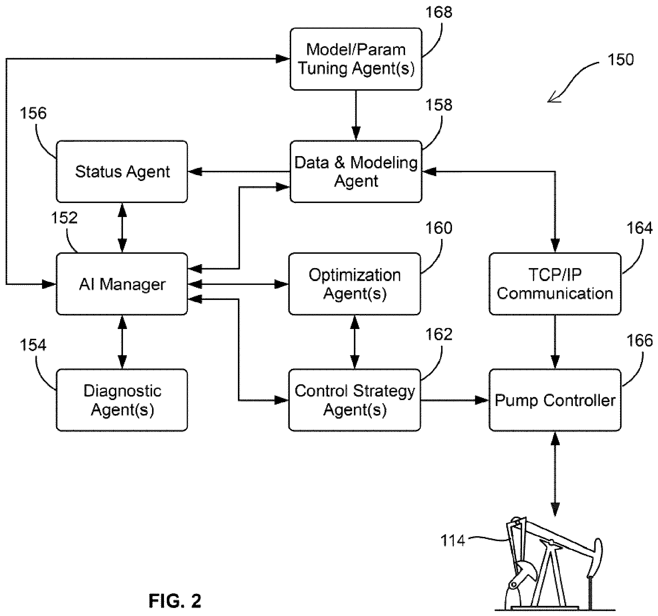

Fig. 2 shows the software structure 150 of the AIMC system 100 as implemented on the system hardware. As shown, the software structure 150 comprises an AI Manager 152 (also called a supervisory manager or a supervisory agent), one or more Diagnostic Agents 154, a Status Agent 156, a Data and Modeling Agent 158, one or more Optimization Agents 160, one or more Control Strategy Agents 162 and one or more Model/Parameter Tuning Agents 168, each implemented as an IA. The software structure 150 also comprises a communication module 164 and a pump controller 166. As those skilled in the art appreciate, the communication module 164 comprises a suitable wired or wireless channel and function components for communicating via the channel using a set of suitable communication protocols. In this embodiment, the communication module 164 is a TCP/IP communication module using the well-known TCP/IP communication protocols.

The AI Manager 152 manages the Diagnostic Agents 154, the Status Agent 156, the Data and Modeling Agent 158, the Optimization Agents 160 and the Control Strategy Agents 162 based on data received therefrom (described in more detail later). The AI Manager 152 initiates and prioritizes these agents 154 to 162 and 168 for optimizing processor utilization, communicating the results of tests, diagnoses and control recommendations, and facilitating the learning capability via updates to the data and probability tables used by the PGNs or Bayesian Networks utilized by the various lAs.

In this embodiment, real-time data collected from the sensors 106 is first transmitted to the pump controller 166. The pump controller 166 then transmits the sensor data to the Data and Modeling Agent 158 via the communication module 164.

The Data and Modeling Agent 158 manages incoming data, performs real time analysis and tests as directed by the AI Manager 152. The Data and Modeling Agent 158 establishes and maintains a process model for the system operation, which, depending on the implementation, may comprise a plurality of sub-models for various aspects of the system operation. The Data and Modeling Agent 158 processes the real-time sensor data to update the process model.

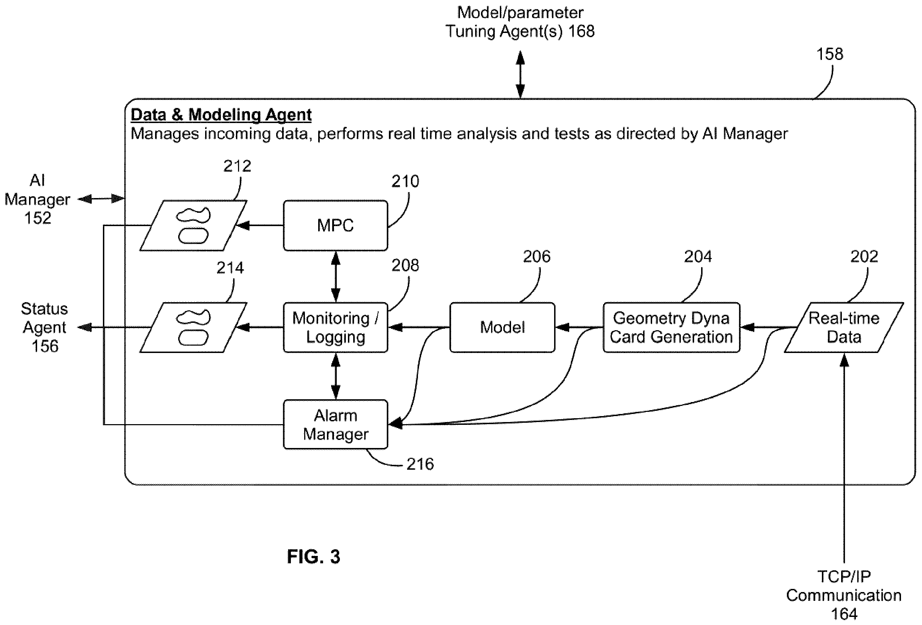

Fig. 3 shows a flowchart of data processing in the Data and Modeling Agent 158. As shown, the real-time sensor data 202 received from the communication module 164 is processed by a Geometry Dynamometer Card (Dyna Card) Generation module 204 for generating the Geometry Dynamometer Card, and is further processed by a modeling module 206 for updating the process model. The Data and Modeling Agent 158 also receives data from the AI Manager 152 representing updates to the process model based on diagnostic tests conducted by the Diagnostic Agent(s) 154 (described in more detail later) to update the process model. Moreover, The Data and Modeling Agent 158 also receives data from the Model/Parameter Tuning Agent(s) 168 to tune the process model when the process model deviates significantly from its last known state.

A monitoring and logging module 208 monitors the updating of the process model, generates data 214 for the Status Agent 156, and records the process model updates to a log. The monitoring and logging module 208 also provides necessary data for a model predictive control (MPC) module 210 for predicting changes of the process model. The data 212 and 214 respectively generated by the MPC module 210 and the monitoring and logging module 208 are sent to the Status Agent 156.

Meanwhile, the real-time sensor data 202 and data generated by the Geometry Dynamometer Card Generation module 204, the modeling module 206 and the monitoring and logging module 208 are also sent to an alarm manager 216 for identifying events needed to be noticed or alerted. Data, e.g., data related to the identified events and generated by the alarm manager 216, is also fed to the Status Agent 156.

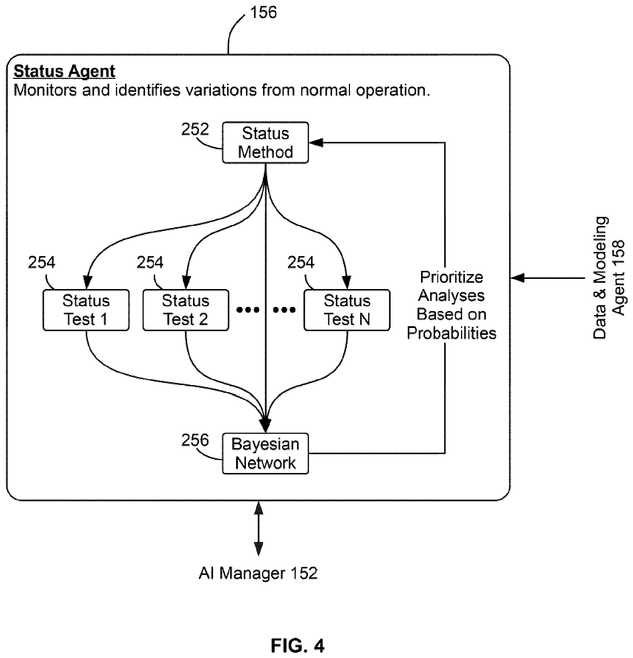

The Status Agent 156 uses data received from the Data and Modeling Agent 158 for updating the system status, tracking the progress and the specific states of the process, and monitoring and identifying variations from normal operation. As shown in Fig. 4, the Status Agent 156 uses data received from the Data and Modeling Agent 158 to conduct a series of status tests 254 according to a status method 252. Status test results are fed into a Bayesian network 256 for analysis. The output of the Bayesian network 256 is sent to the AI Manager 152 for adjusting the system operation. The output of the Bayesian network 256 is also used for adjusting the status method 252 with prioritization of analyses based on probabilities.

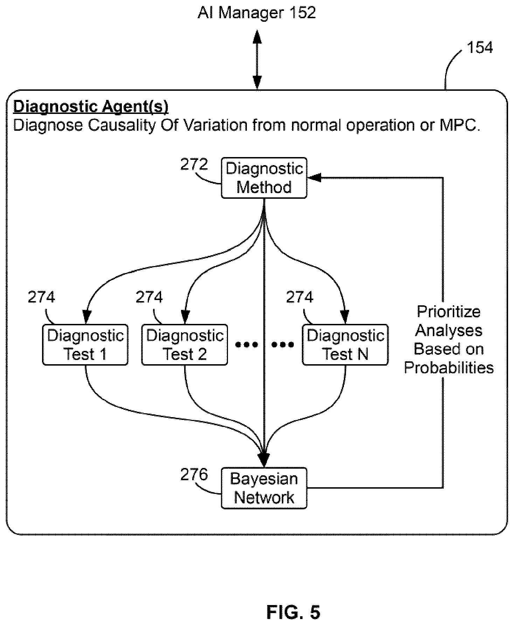

The Status Agent 156 reports the status of the system 100 to the AI Manager 152. If required, e.g., if the system is at a particular state, if an abnormal condition is detected, or if a scheduled diagnosing time is approached, the AI Manager 152 then instructs the one or more Diagnostic Agents 154 to diagnose at least a portion of the system and collect diagnostic data from the sensors 106 for identifying deviation from normal operation or MPC. As shown in Fig. 5, the Diagnostic Agent 154 conducts a series of diagnostic tests 274 according to a diagnostic method 272. Diagnostic test results are fed into a Bayesian network 276 for analysis. The output of the Bayesian network 276 is sent to the AI Manager 152 for adjusting the system operation and for updating the Status Agent 156. The output of the Bayesian network 276 is also used for adjusting the diagnostic method 272 with prioritization of analyses based on probabilities.

Based on the report from the Status Agent 156 and the diagnostic results of the Diagnostic Agents 154, the AI Manager 152 commands the one or more Control Strategy Agents 162 to evaluate and recommend control actions for adjust the operation of the system, by, e.g., modifying parameters of the pump controller 166. As shown in Fig. 6, the Control Strategy Agent 162 receives data regarding the system operation from the AI Manager 152 and optimization data from the Optimization Agent(s) 160 (described later), and conducts a series of control strategy tests 304 according to a control strategy method 302. Control strategy test results are fed into a Bayesian network 306 for analysis. The output of the Bayesian network 306 is sent to the pump controller 166 for adjusting the system operation. The output of the Bayesian network 306 is also used for adjusting the control strategy method 302 with prioritization of analyses based on probabilities.

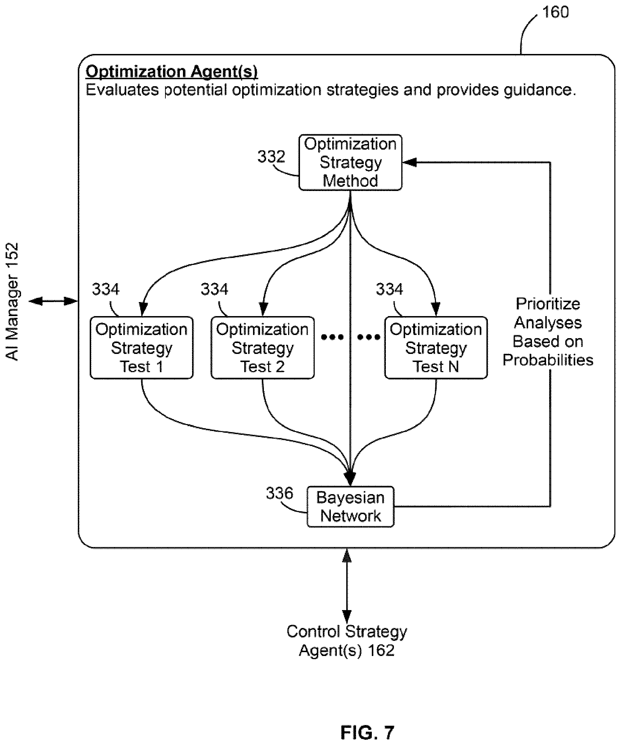

The AI Manager 152 may also instruct the one or more Optimization Agents 160 to determine an optimized control strategy for the Control Strategy Agents 162. As shown in Fig. 7, the Optimization Agent 160 receives data regarding the system operation from the AI Manager 152, and conducts a series of optimization strategy tests 334 according to an optimization strategy method 332. Optimization strategy test results are fed into a Bayesian network 336 for analysis. The output of the Bayesian network 336 is sent to the Control Strategy Agents 162 for determining control actions. The output of the Bayesian network 336 is also used for adjusting the optimization strategy method 332 with prioritization of analyses based on probabilities.

As those skilled in the art appreciate, the modules 152 to 168 are defined based on their functions and roles. Each of the modules 152 to 168 may comprise one or more programs or program modules, and may be deployed on one or more computing devices 110 and the controller 102, in any suitable forms, e.g., as software programs, software packages, firmware, or hardware components such as field-programmable gate array (FPGA) or application-specific integrated circuit (ASIC) chips. The processing load may also be dynamically distributed among at least some of the processors of the controller 102 and/or computing devices 110.

Although not shown in Fig. 2, the controller 102 and the computing devices 110 each executes an operating system, e.g., a real-time operating system, Unix®, Linux®, Microsoft® Window NT, Microsoft® Windows 2000 Server, Microsoft® Windows Server 2012 or the like. Generally, an operating system is a set of computer readable code executed by the processor for managing various hardware and software components, and for supporting the execution of application programs. The controller 102 and the computing devices 110 may all execute the same type of operating system, or they may execute different types of operating systems as required.

As computation capacity and programmability of most industrial controllers is typically too limited to implement modern AI techniques, embodiments of computing devices described herein may incorporate a run-to-completion, event driven operating system with a non-blocking kernel that can prioritize the monitoring and control of time sensitive aspects of the control solution while running multiple algorithms or threads incorporating artificial intelligence methods that may run synchronously or asynchronously with a given process on a priority basis.

Moreover, depending on the system design and implementation, some computing devices may not execute an operating system at all. Rather, these computing devices may only execute a management program to manage the hardware and/or software components thereof, and facilitate their operation.

With the software structure 150, the AIMC system 100 utilizes a collection of probabilistic methods and pattern recognition techniques to monitor and control the system operation process. The AIMC system 100 incorporates stochastic understanding of the process with machine learning techniques to make process control decisions under uncertainty as deterministically as possible.

As described above, the AIMC system 100 establishes and maintains a process model for the system operation. The process model is accurately tuned to reflect current operating conditions and to perform optimally. In particular, the system 100 observes the process operation and compares it to past or historical observations to detect drift of process parameters. Process simulations or a statistical representation of process outputs resulting from process parameter drifts are compared against current observations and used to identify, validate and update changes to the process model.

A process simulation can be utilized to map exhaustively, or selectively, the process response to process variables, their range of operation and potential deviations such that changes to a process can be determined probabilistically and represented as a Probabilistic Graphical Network (PGN), potentially via machine learning techniques. When combined with historical observations of the process, parameter tuning or process optimization is enabled that is highly deterministic in nature without exhaustive simulations and/or numerical methods in real time.

Using machine learning techniques, process responses such as energy consumption or production output could be represented in a PGN and used to provide guidance to a numerical optimization means. The guidance could encompass identifying a compact range for the numerical search to converge on an optimal solution for the operating parameters or in the event of a process with high levels of certainty, provide the optimal operating parameters directly to control. In an alternate embodiment, the process variables could be represented as Fourier series or other approximation means and a probabilistic mapping of the global responses of the process could be generated as a function of these Fourier coefficients. This provides a unique advantage over other optimization methods as it can greatly reduce the time required to determine a local or a global optimum for the process in real time.

The probabilistic mapping of the process could be computed in the background of a processor controlling the process or on a separate processor which could also utilize parallel computing methods to reduce the elapsed time, and generate the probability tables for the optimization PGN.

Furthermore, the determination of a control action is based on a decision analysis that incorporates the cost and risk associated with the possible decision choices including the risk of taking control action on an incorrect classification or observation.

The resulting technology enables diagnostic methods similar to that of automated medical diagnostic tools. While equipment, e.g., the pumpjack 114, is operating, the lAs run in the background identifying equipment and process issues, performing tests and calculations to identify with acceptable certainty the operational state of the system being monitored, the source(s) of any deviations from normal operation or problems, the best course of action and implement the action and/or provide operational guidance to operators, supervisors or other automated controllers.

The AIMC system 100 utilizes one or more of a process model and/or sub-models, historical process information and/or process-derived state machines to monitor the process. The AIMC system 100 uses a collection of lAs to identify process deviations and disturbances, classify, determine and validate the nature or underlying causality for the disturbances utilizing PGNs such as Bayesian Networks that operate synchronously or asynchronously. The AIMC system 100 initiates optimization routines and determines control direction utilizing risk assessment and decision analysis with PGN or Bayesian Networks. Operations of the AIMC system 100 are coordinated by the AI Manager 152.

### Overview of Intelligent Agents (lAs)

As described above, the AIMC system 100 comprises a variety of lAs, including but not limited to, the AI Manager 152, Diagnostic Agents 154, Status Agents, 156, Data and Modeling Agent 158, Optimization Agent(s) 160 and Control Strategy Agent(s) 162 and Model/Parameter Tuning Agent(s) 168.

The basic structure of an IA is a statistical or probabilistic causality model with supporting algorithms and software methods to enable updates of the lA's probability tables, entry of states for node values in a Probabilistic Graphical Model (PGM) and execution of queries. The agents or lAs may include additional algorithms and methods such as pattern recognition, numerical methods to estimate process parameters or optimize process operation as well as those to monitor, test and classify observations. In this embodiment, the AIMC system 100 contains a causality model which is a PGM in the form of a Bayesian Network or undirected probabilistic network such as a Markov network. However, other implementations of PGNs known to those skilled in the art may also be used to perform these functions.

A typical operation of an IA, other than the AI Manager 152, includes the following:
- receive incoming data;
- if required, use algorithms to further analyze the data;
- update any probability tables;
- calculate or solve statistical or probabilistic causality model;
- determine whether a decision or direction has been reached;
- if not, identify additional tests or data required;
- report to the AI Manager 152; and
- wait for further instructions or data from AI Manager until a resolution has been reached.

Depending on the process and the different diagnostic complexities, multiple lAs of each type of IA may be deployed. The activation and execution of the lAs are controlled on a priority basis that is statistically or probabilistically determined. Alternately, lAs may be broken into separate sub-agents to reduce their complexity and/or enhance their capabilities. For example, a Data and Modeling Agent 158 may be split into a separate IA for managing and testing historical data and a separate IA for managing and testing real-time or streaming data. A Diagnostic Agent 154 and its PGN may be constructed in an object-oriented manner wherein it comprised multiple sub-PGNs, each for a range of potential diagnoses that can be run individually as separate agents or as part of a larger more encompassing PGN in a single agent. One example of multiple sub-agents under an encompassing agent is an object-oriented Bayesian Network (OOBN). A PGN may be represented as a single node in a larger PGN network. The PGN can be run on its own or in conjunction with others.

### Implementation

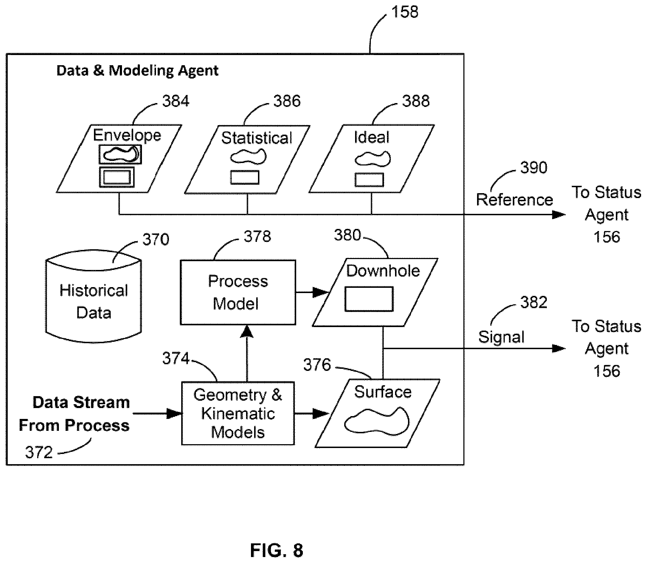

The lAs may be implemented using any suitable methods and programming languages. Figs. 8 to 11 show some examples of the function diagrams of some lAs in the context of a cyclic pumping process. Fig. 8 shows the function diagram of the Data and Modeling Agent 158. As shown, the Data and Modeling Agent 158 stores the historical data 370 of the pumpjack operation, and maintains operational envelope data 384, statistical operation data 386 and data of an ideal operation model 388. The operational envelope data 384, statistical operation data 386 and data of an ideal operation model 388 are fed to the Status Agent 156 as a reference 390.

The sensor data 372 received from the pump controller 166 via the communication module 164 is analyzed in the Data and Modeling Agent using geometry and kinematic models 374 for generating modeling data for surface operation 376. After analyzed by using geometry and kinematic models 374, the data 372 is further analyzed by using a process model 378 for generating modeling data for downhole operation 380. The modeling data for surface operation 376 and the modeling data for downhole operation 380 are fed to the Status Agent 156 as a signal 382.

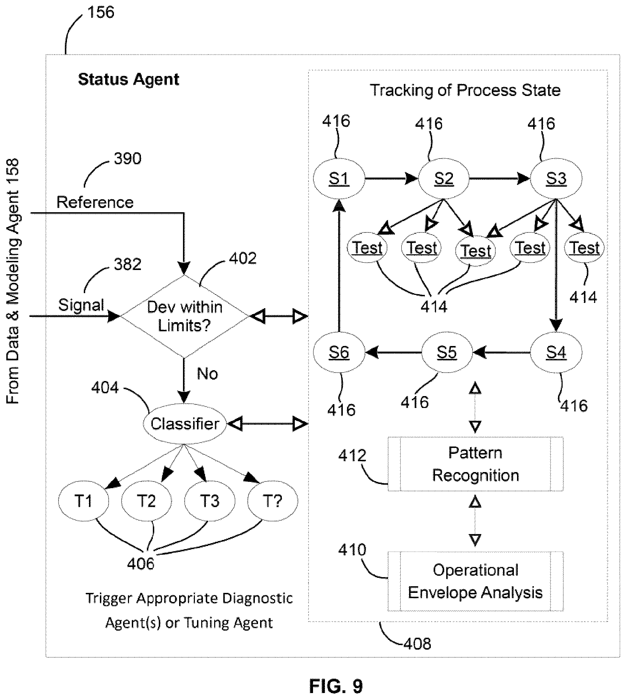

Fig. 9 shows the function diagram of the Status Agent 156. The Status Agent 156 receives the reference 390 and signal 382 from the Data and Modeling Agent 158, compares the received reference 390 and signal 382 to determine whether or not the deviation of operation is within the predefined limits 402. If the deviation of operation is not within the predefined limits 402, a classifier 404 is used to generate one or more triggering events 406 to trigger appropriate Diagnostic Agent(s) 154 or Model/Parameter Tuning Agent(s) 168 to diagnose the system and/or tuning the operation model. The classifier 404 also triggers a sub-module 408 to track the process state.

If the deviation of operation is within the predefined limits 402, the sub-module 408 is triggered to track the process state.

When the sub-module 408 is triggered, it tracks the operation state using operational envelope analysis 410 and pattern recognition 412. During operation state tracking, the sub-module 408 may conduct tests 414 for facilitating operation state tracking. As described before, the process state is reported to the AI Manager 152.

In the example of Fig. 9, the process is shown as looping between six (6) states S1 to S6, collectively denoted using numeral 416. Those skilled in the art appreciate that such a loop of states is purely for illustrative purpose only, and the actual process may have a complex state diagram.

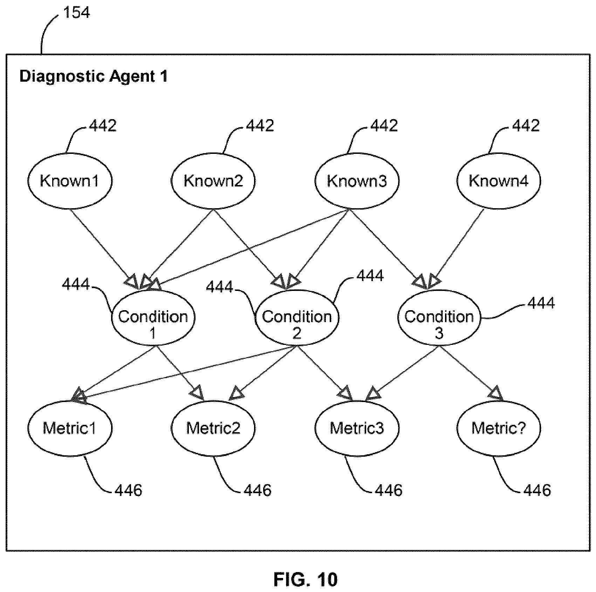

Fig. 10 shows the function diagram of a Diagnostic Agent 154. As shown, the Diagnostic Agent 154 uses a causal PGM model comprising a network of nodes of knowns, conditions and metrics for diagnosing the system operation.

The top level nodes 442 are knowns or known variables, such as process parameters, independent or ambient conditions, states of the process that can be observed, e.g., directly measured or applied to the process, or are known with relative certainty. The knowns 442 may also include historical data such as number of stress cycles, rod stress to failure, failure or maintenance history, known production metrics such as cumulative production or material properties, process inputs or process variables known with relative certainty.

The mid-level nodes 444 are the conditions that are potential diagnoses for the underlying conditions that are contributing to the deviations in the process.

Conditions 444 can include a variable process parameter or its state such as a change of fluid levels, parameters indicative of quality or failure or degradation of a component or other conditions of interest or value that may require control action or need to be tracked or maintained to ensure process performance and/or quality. Conditions 444 can also include the limits and thresholds of operation that determine the need for adjustment of the model and operations, e.g., cumulative stress over many cycles resulting in fatigue and affecting time or stress to failure.

The bottom level nodes 446 are metrics, including results of tests, observables, symptoms or metrics which are dependent on the underlying conditions from which their inherent probabilities are used to identify the underlying conditions with an acceptable degree of certainty. Metrics 446 can include categories such as energy conservation, production optimization, equipment status or process status, calculated pump fillage, results from automated or manual tests/checks of fluid levels, computational analysis, observed process conditions, usually but not always initiated to assist in a diagnosis or determination of a condition.

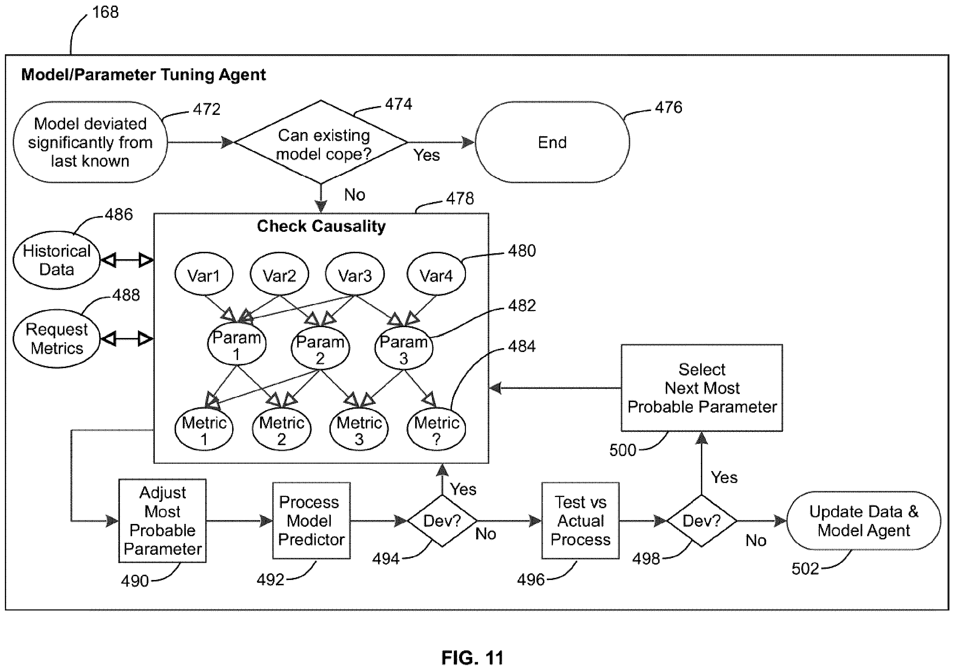

The Model/Parameter Tuning Agent 168 utilizes Probabilistic Graphical Models to identify at least one parameter for modifying the process model. Fig. 11 shows the function diagram of the Model/Parameter Tuning Agent 168, which is activated when the operation model is deviated significantly from its last known state. As shown, when it is determined that the operation model is deviated significantly from its last known state 472, the Model/Parameter Tuning Agent 168 checks whether or not the existing model can cope the deviation 474. If yes, the Model/Parameter Tuning Agent 168 ends 476.

If the existing model cannot cope the deviation, the Model/Parameter Tuning Agent 168 checks causality 478 using a causal PGM model that comprises a network of a plurality of variables 480, parameters 482 and metrics 484. Historical data 486 and request metrics 488 are also used in the causality check 478. The results of the causality check 478 is used to adjust most probable parameter(s) 490, update process model predictor 492. If deviation still exists 494, the process model predictor is fed to the causality check 478 for further adjusting most probable parameter(s) and updating process model predictor. If deviation is eliminated (the "No" branch of 494), a comparison 496 is conducted to compare the test results with the actual process. If the comparison 496 shows that deviation exists 498, the next most probable parameter is selected 500, and the causality check 478 is conducted again.

If the comparison 496 shows no deviation (the "No" branch of 498), the Model/Parameter Tuning Agents 168 updates (502) the Data and Model Agent 158 using the process model predictor.

A timing diagram for the implementation with a cyclic pumping process is shown in Fig. 12, showing data sample to data sample operation where patterns that deviate from the 'ideal' envelope are tracked, learned and identified or stored for later identification. For the purpose of better illustration, Fig. 12 is partitioned to three portions of Figs. 13A, 13B and 13C.

Generally, the system comprises comparing real time data to statistical and/or historical profiles of the process or a simulated profile of the process, taking into account operational variance and thereby identifying deviations. The Status Agent 156 tracks the progress and the specific states of the process. Pattern recognition, drift from the operational envelope, and metrics of the deviation are in a classifier to identify probable diagnostic agents to trigger including a Model/Parameter Tuning Agent 168. The AI Manager 152 triggers the appropriate Diagnostic Agents 154 and receives the results. Diagnostic Agents 154 with causal process-specific PGNs identify probable causes for the deviation and their likelihood.

The AI Manager 152 compares the probabilities of the various Diagnostic Agents 154 and updates the Status Agent 156 of the diagnosis of high certainty or initiates additional diagnostic tests if the level of uncertainty is too high to differentiate a likely cause. The AI Manager 152 may further initiate the Model/Parameter Tuning agent 168 based on the output of the Diagnostic Agents 154. Control Strategy Agents 162 assess opportunity and/or risk of control action based on the probability of one or more diagnoses and recommends a control action based on the opportunity /risk analysis. Further, Optimization Agents 160 may be triggered prior to a control action being implemented to optimize or determine the precise control action to be taken.

### Detailed Agent Description

In this embodiment, the lAs of the system 100 monitors the pumpjack operation and dynamically adjusting the sucker rod pump.

### Al Manager

The AI Manager 152 manages all lAs. The AI Manager 152 handles priorities and triggers one or more Diagnostic Agents 154, based upon observations and triggers which are received from one or more Data & Modeling Agents 158 and the Status Agent 156.

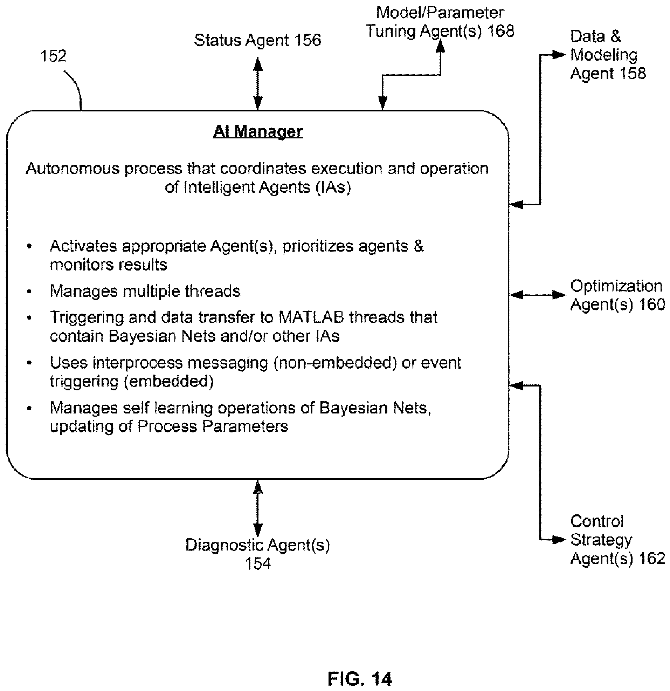

As shown in Fig. 14, the process of the AI Manager 152 is autonomous and asynchronous to coordinate execution and operation of the different lAs. The responsibilities and of the AI Manager 152 include:
- receives outputs from the Status Agent 156, activates the appropriate Agent(s), dynamically prioritizes the agents and monitors results from the different agents.
- tracks the status of all active Diagnostic Agents 154, Optimization agents 160 and Control Strategy Agents 162.
- uses results received from the Diagnostic and Control Agents 154 and 162 to enable, disable or adjust the tests used by the Data & Modeling Agent 158 and the Status Agent 156.
- oversees triggering and data transfer to different computational threads, such as lAs, many of which may contain PGMs, such as Bayesian Networks and/or other lAs .
- uses inter-process messaging (non-embedded) or event triggering (embedded).
- manages self-learning operations of Bayesian Networks and updating of Process Parameters

### Data & Modeling Agent

One role of the Data & Modeling Agent 158 is to monitor and track process information and to run process models based on the process information for use by other agents.

As shown in Fig. 15, the Data & Modeling Agent 158 operates synchronously in real time, handling incoming data by running to completion each time data is received or after each completion of a cycle in a periodic process or batch process, and/or over longer periods/multiple cycles.

The Data & Modeling agent 158 runs process model(s) and performs real time analysis and tests at each data sample and/or cycle as directed by AI Manager 152 which acts on the behalf of diagnostic or decision agents. Tests or algorithms that require computational periods longer than time provided between data samples may be initiated and run asynchronously.

The Data & Modeling Agent 158 also performs logging of historical data 622.

The Data & Modeling agent operates in real time, receiving and conditioning incoming data 608 and polling lower priority data as required. It will run kinematic and dynamic models 610 of the equipment and processes utilizing the received data to observe and estimate the actual performance of the process. To this end, the Data & Modeling agent will generate and log performance references for comparison against incoming data.

These references will include a static model 626 of the performance of the process based on process parameters and established operating envelopes. An operating envelope or reference is based on static measurements or known process parameters, and is relied upon to ensure that the process is within operational limits under all conditions, e.g., that the system is starting but may not be adjusted, or that models may have insufficient information to provide their higher level capabilities and accuracy. The operating envelope provide a reasonable expectation of what process variables and parameters should be in normal operation.

The references further includes a statistically generated mean reference with standard deviations of key measured and derived process parameters based on multiple process cycles which is intended in part to filter out process noise and external disturbances. The statistically generated mean reference will be generated over multiple cycles, logged periodically, used for a limited period of time for comparison against current process performance and then replaced as newer references are generated as required or as process parameters change. Each logged reference is stored for historical analysis.

The references also include a model-based predictive reference 624 utilizing measured and derived process parameters which incorporates a dynamic process mode and may or may not include ideal or projected outputs. This model will be compared and validated against incoming process data and will also be logged and updated periodically like the statistical reference.

In the case of reciprocating systems such as a pumpjack, the agent generates 606 a surface and a downhole dynamometer card 614 and 616, respectively, for each pump cycle using the kinematic and dynamic models 610 of the surface and downhole equipment with the incoming process data 608. Dynamometer cards 614 and 616 represent rod load as a function of rod position during the course of a single pump cycle consisting of a complete upstroke followed by a complete downstroke. The actual values and shape of the cards 614 and 616 are then compared or correlated with the static, statistical and predictive models as required.

Additional process parameters may be monitored including, but not limited to, tubing and casing pressures, measured or derived forces and parameters such as pump friction, pump fillage, fluid levels, rod stresses along the rod string or applied to various process equipment components, surface or downhole.

The potential to use visual information such as pictures or videos to identify production and operational issues is also recognized. For example, video of the motion of a sucker rod pump captured by a video sensor or camera 106 could be useful to identify mechanical issues such as belt slippage, leaking chemicals or broken components that may not be as evident from solely monitoring of process inputs. In other process such as boilers, thermal images may be utilized to identify and located hot or cool spots in a boiler tube network. The agent will include algorithms for specific tests that maybe requested by the AI Manager 152 for use by other agents. These tests will be performed as data streams in and may be performed for all or part of a cycle or performed once a given cycle has completed. Calculations for the cyclic tests may be distributed between streamed data and the completion of the cycle to optimize processor utilization. Tests may include comparisons of incoming data against static, reference and model predictive surface and downhole cards 638, 634 and 636, respectively, process / equipment operating envelopes and safety limits.

The agent will primarily transmit measured / derived data and results of tests to the Status Agent 156 or, if required, directly to the AI Manager 152. The agent will internally manage the periodic logging of historical data and references. Agent specific tests and exception logging of data will occur at the request of the AI Manager 152.

Typical observable conditions and configured information for a sucker rod application include: Pressure in Casing and Tubing, Fluid Level, Well parameters and configuration Measured and calculated, Rod String Completion Data, Fluid viscosity and makeup, Flow / No-Flow Detection, Vibration Sensing - Level, Motor Voltage, Current, Torque, Speed, Rod Loading: static and dynamic, Stroke Reference Position, Interlock Status.

### Status Agent

The primary role of the Status Agent 156 is to identify any potential variation or deviation from normal or predicted operation occurring such as an external disturbance or a change in process conditions or parameters. Fig. 16 shows the detail of the Status Agent 156. The Status Agent 156 comprises a Bayesian network 652, which uses a plurality of input parameters 654 to conduct agent specific tests 656 and optional test 658. The Bayesian network 652 generates a plurality of outputs 660 for the AI Manager 152.
- The Status Agent 156 consists of a mechanism to detect deviation from normal, ideal or predicted operation, a PGM based state model of the process, an operational envelop analysis means and pattern recognition means and a classifier to triggers the appropriate Diagnostic and Control Agents 154 and 162 and a mechanism to update inherent PGMs via machine learning techniques if required.
- The Status Agent 156 monitors and identifies between the real-time data and historical data, model predictions.
- The Status Agent 156 identifies whether variations significantly deviate from normal operation and initiates tests to identify potential sources or categories of sources for the variation and sets the priorities for investigation. This optimizes use of valuable and limited computation capacity.
- The Operational Envelope Analysis uses a statistical mean of the process based on historical data that is periodically updated and/or a predicted / ideal model of the process. Deviations from the normal or ideal operations are identified and flagged as to their severity.
- The state of the process is tracked as it moves through its operational cycle using a PGM based state model that utilizes tests on real time data to probabilistically identify the current operation state.
- For example, in the sucker rod pump application, the downhole pump cycles through a upstroke where the fluid load of the pump is lifted by upward motion, the closing of a travelling valve and the opening of a standing valve followed by the downward motion of the pump, the opening of the travelling valve and the closing of the standing valve. In addition to the states of the valves, there are states of fluid and/or gas compression and decompression. As the process moves through the different states, the PGM determines the likelihood of each stated based on observations and tests results. The PGM could be a hidden Markov model, Bayesian Net or like probabilistic graphical model. See Figure 17.
- A pattern recognition mechanism is included. A preferred implementation is a time series pattern recognition that provides a probabilistic match of incoming data stream to known patterns from a database to assist the process state tracking by PGM. Euclidean, dynamic time warping and dynamic derivation time warping are the preferred matching criteria for implementation although many mechanisms exist. In addition, the pattern recognition includes a classification mechanism that can identify and classify recurrent patterns that are associated with process deviations, store these patterns and track their reoccurrence in conjunction with process variables to assist with manual diagnosis or a diagnosis based on machine learning techniques using the pattern and the data observations associated with its occurrence.
- Finally a classifier is used to identify and prioritize the appropriate diagnostic agents and/or Control Agents to trigger.
- Probability tables of PGMs and classifiers are updated as diagnoses are confirmed and validated to improve performance

The Status Agent 156 utilizes a PGM as a classifier that compares process data against Process Model predictions and/or statistical historical data to identify a deviation(s) from predicted or normal operation.

Based on the nature of deviation, diagnostics or evaluation of specific process parameters may be triggered and prioritized in order to identify the source and causality.

Notice of completion of tests and their results will be sent directly to the AI Manager 152 which will trigger and prioritize the appropriate Diagnostic, Model/Parameter Tuning, Optimization and Control Agents 154, 160, 168 and 162. For example, probable deviations in the process model's parameters will trigger the activation of the Model/Parameter Tuning Agent 168.

Results of the diagnostics test and confirmation of diagnoses by the various agents will be communicated to the Status Agent 156 via the AI Manager 152 to further train the Status Agent 156. Priors for the Status Agent 156 may be set manually or derived from probabilities established by similar wells.

It is intended that hidden or latent variables/nodes will be incorporated into the Status Agent 156 to facilitate the identification of modes, dependencies, relationships or issues not contemplated in the original design of the graphical probability networks deployed.

Initially the Status Agent 156 would need to be iterative in nature, monitoring as process conditions persist or evolve from stroke to stroke. It would generate status conditions and alarms to be relayed to the AI Manager 152 which would facilitate diagnosis and courses of action. Deviations that persist after several strokes may increase the probabilities of some conditions and thus a reallocation of processor computational priorities.

The Status Agent 156 would need to be capable of recognizing changes to processes or well conditions that evolve on a gradual level over the course of hours, days or months requiring access to historical trending of well conditions. It may be determined that the Status Agent 156 may be divided into two separate agents to address short and longer term process variations.

It is also recognized that this agent may be reduced in scope to exclude generating alarm for some system statuses that are better left to deterministic or logic type control.

The presence or absence of control action to remedy a known deviation may be incorporated into the Bayesian network as resolving the condition which may take several strokes or more and generate additional process variations.

### Diagnostic Agents

A role of the Diagnostic Agent 154 is to identify any potential variation or deviation from normal or predicted operation occurring such as an external disturbance or a change in process conditions or parameters. As shown in Figure 18A, one or more Diagnostic Agent 154 may be in communication with the AI Manager 152.
- The Diagnostic Agent 154 diagnoses causality of variation from normal operation or MPC. Operates asynchronously after being triggered
- The Diagnostic Agent 154 employs a PGM that identifies the probable condition of the equipment and/or the causality for the deviation based on tests and known data.
- The Diagnostic Agent 154 may request test(s) by data & modeling agent via AI Manager.
- Outcomes from the diagnostic agent may be used to trigger additional agents such as the Model/Parameter Tuning Agent 168 that will identify and quantify variations in process parameters.

Also referring to Fig. 10, in a preferred Diagnostic Agent implementation, a causal PGM model with three main levels or categories of nodes would be used that share features found in clinical diagnoses.

As described before, top level nodes 442 are comprised of process parameters, independent or ambient conditions, states of the process that can be observed (directly measured or applied to the process) or are known with relative certainty (Predispositions).

Mid-level nodes 444 are the conditions that are potential diagnoses for the underlying conditions that are contributing to the deviations in the process (Diseases).

Bottom level nodes 446 are results of tests, observables, symptoms or metrics which are dependent on the underlying conditions from which their inherent probabilities are used to identify the underlying conditions with an acceptable degree of certainty (Diagnostic Tests, Symptoms).

### Diagnostic Agent Example 1: Process deviations due to external disturbances: Gas Interference

As shown in Figs. 17 and 18B, a Diagnostic Agent 154A is requisitioned or initiated to apply a gas interference model, to validate and quantify the condition and to facilitate updates or adjustments to the model predicative control. The Diagnostic Agent 154A comprises a gas interference model 700 and a Bayesian network 702, which uses a plurality of input parameters 704 obtained using suitable methods to conduct agent specific tests 706 and optional tests 708. The Bayesian network 702 generates a plurality of outputs 710 for the AI Manager 152. The Diagnostic Agent 154A also comprises static data of pump filage 712.

Tests applied in the model will include pattern recognition of gas interference in the downhole load position profile, whether or not sufficient load has been dropped to account for fluid loads and friction, rate of change of loads with respect to position and time, whether timing, positions and rate of change of loads are consistent with models of gas and fluid compression given the other observed deviations in the downhole pump loads and potentially the rod loading at the surface. In Fig. 17, the various dynamometer are shown, the various stages of the operation being identifies by : PPRL - Peak Polish Rod Load, MPRL - Minimum Polish Rod Load, CBE - Counterbalance Effect, TV - Travelling Valve, SV - Standing Valve, and numerical process points identifying: 1 - Start of DH Upstroke, 2 - Fluid Load Picked up, SV open, TV closed, 3 - Top of DH Stroke / Start of DH Downstroke, 4 - Fluid Load Being Dropped, TV & SV Closed, 5 - Gas and Fluid Compression complete, SV open, 6 - Gas compression in progress, TV & SV Closed, Pump Fillage identifiable, 7 - Fluid Load Picked up, TV open, SV Closed, 8 - Pump plunger hitting top of pump, and 9 - Pump plunger hitting bottom of pump. A sample deviation related to gas interference is shown in dotted lines.

Significant gas interference can result in fluid pound which stresses the rod string and equipment or be indicative of a gas lock or pumpoff condition necessitating a shutoff of the equipment to allow fluid levels in the well to rise sufficiently for pumping to resume. Diagnostic Agent 154A may trigger yet another separate Diagnostic Agent 154A to assess the contributions to equipment fatigue.

The probability of the diagnosis will be compared by the AI Manager 152 to assess the likelihood of a correct diagnosis based on the results of independent diagnoses for other conditions.

### Diagnostic Agent Example: Fatigue Monitoring

Further, as required by the AI Manager 152, a further Diagnostic Agent 154B for Fatigue monitoring can be recruited that monitors, assesses and tracks rod string equipment fatigue. As shown in Fig. 18C, the Diagnostic Agent 154B comprises a downhole model 740 and a Bayesian network 742, which uses a plurality of input parameters 744 obtained using suitable methods to conduct agent specific tests 746 and optional tests 748. The Bayesian network 742 generates a plurality of outputs 750 for the AI Manager 152. The Diagnostic Agent 154B also comprises fatigue tracking data 752. The Diagnostic Agent 154B maintains a monitoring/logging sub-module 754 for monitoring and logging the diagnostics history.

Forces applied to the rod during operation are calculated by the downhole model 740 and resolved to fixed segments of the rod string. The stress and fatigue resulting from these forces is quantified and tracked. Goodman Analysis methods 744 are used to assess how the stresses applied in each stroke impacts the fatigue and life cycle of the rod string. Figs. 19A and 19B show a three-dimensional plot of the stress and fatigue loads on the rod string over the entire cycle. The surface is typically colorized to show the Goodman loading for each section of the rod string throughout the cycle enabling a user to easily identify where in the stroke the rod string is being overstressed.

Likelihood of damage to the rod string in the short and long term is assessed including its impact on the mean time between failures (MTBF) for the equipment.

Unacceptable levels of stress are flagged or alarmed and returned to the AI and Alarm managers so that specific control action may be determined and implemented.

### Diagnostic Agent Example: Well Parameters

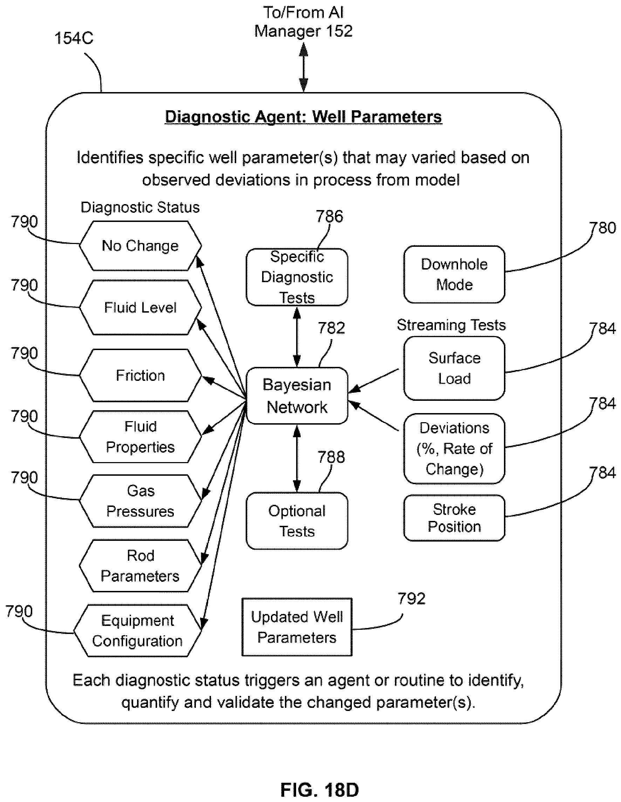

Fig. 18D shows a further Diagnostic Agent 154C for well parameter monitoring that monitors, assesses and tracks well parameters. As shown, the Diagnostic Agent 154C comprises a downhole model 780 and a Bayesian network 782, which uses a plurality of input parameters 784 obtained using suitable methods to conduct agent specific tests 786 and optional tests 788. The Bayesian network 782 generates a plurality of outputs 790 for the AI Manager 152. The Diagnostic Agent 154C also comprises updated well parameters 792.

### The Model/Parameter Tuning Agent:

The Model/Parameter Tuning Agent 168 modifies the probabilistic process model based on the results of the diagnostic tests, and identifies one or more parameters for adjusting the process. The Model/Parameter Tuning Agent 168 employs a PGM that identifies the probable variations of process parameters and/or equipment condition that contribute to the process model based on tests and known data.

Using the probabilities for process parameter variation, the Model/Parameter Tuning Agent 168 can initiate and prioritize numerical or iterative methods with the process model to identify and quantify the possible contributions to the observed deviations and validate them against current data observed from the process. Once the potential sources are quantified, the probability of the variations required to correct the process model are probabilistically considered using a decision net that takes into account the risk associated with incorrect diagnoses.

Specific metrics, tests or measurements that are outside of regular operation may be necessary to assist in the diagnosis and tuning of the process model(s) and would be performed on an as needed basis; however, once "tuned", the need for these tests should be minimized so as not to adversely affect production or consume limited computing capacity.

### Process Model Parameter Tuning Example: Well Parameter Tuning Agent for Downhole Observer Model of Sucker Rod Pump

The Process Model is "self-tuning" or learning. This is outside of the failure of an equipment or external disturbance which are intended be addressed with specialized lAs of their own.

A role of the Process Model Parameter Tuning Agent is to ensure that the process model(s) accurately reflect the actual process. Triggered by the Status Agent 156 and Diagnostic Agents 154, the Tuning Agent 168 identifies, evaluates and quantifies potential variations in model parameters, process variables and equipment condition that contribute to deviations between the process and the process model.

As changes in well conditions persist from stroke to stroke or evolve on a gradual level, there is a need to ensure that process model(s) remain accurate. Probable deviations in the process model's parameters will trigger the activation of the Tuning Agent168.

### Basic Concept of Operation

Using historical sequence of mean, average, or typical process cycles, the Process Model Tuning Agent 168 identifies the most likely causes for the observed deviations in the historical sequence, and validates the cause and corrects the parameters in the model.

In the case of the sucker rod pump / oil well, many different parameter changes or conditions can contribute to a process deviation.

Well conditions can change very quickly from one stroke to the next as in the case of a failure of mechanical systems, pumpoff or gas lock, sticking of the rod string, etc. These may need to be identified and flagged for alarming, change of control mode or action depending on the nature of the condition. Other conditions can be measured such as gas pressure, temperature, pump speed, rod loading, etc.

Process Model parameters change more gradually but also can be affected by well conditions as they change. For example, a leak in the tubing can affect fluid levels and pressure in the tubing.

Some of these well conditions can affect multiple parameters. For example, temperature can affect fluid viscosity and cause wax to precipitate increasing friction. Fluid level can affect downhole pressure and buoyant rod weight affecting friction, viscosity and other observed forces.

Some parameters change slowly over hours or days versus from stroke to stroke. The agent would assess the rate of change of parameters and target those most likely to influence the observed error over the time observed for it to manifest.

The scope of operation of the agent would be limited to the tuning of the downhole model but also capable of identifying a change that is beyond that scope (independent of the model) such as equipment failure or some external disturbances. The IA would then direct other agents, algorithms, control modes or alarm managers to engage to resolve the deviation in the process from the model.

To tune the model, it may be advantageous to have an IA provide direction as to which parameters and the range of values for those parameters so that an algorithm may more expeditiously search for corrective values rather than a global search. It may also assist in identifying whether one or more parameters need adjustment.

### Agent Implementation

The Process Model Tuning Agent 168 would compare historical records of the process with the current record, taking the current measured values of process variables and derived process metrics to identify and validate which model parameter(s) have varied and determine the corrected values.

In the case of the pumpjack, there are significant variations from one dynamometer card to the next which may mask changes in Process Model parameters. To overcome this, multiple dynamometer cards would be used to generate a distribution of which the mean and variance/standard deviation would be saved on a periodic basis in the form of a Fast Fourier Transform (FFT). A historical "mean" card be compared to the most recent mean or the current output of the Process Model to identify shifts in the metrics.

Referring to Fig. 10, in a preferred IA implementation, a causal PGM model with three main levels or categories of nodes would be used in a manner similar to that used in a diagnostic agent.

As described before, top level nodes 442 comprise process parameters, independent or ambient conditions that can be observed (directly measured or applied to the process) or are known with relative certainty and can influence the likelihood a parameter has changed (Predispositions).

Mid-level nodes 444 are the Process Model parameters that cannot be directly measured with certainty and are subject to variation (Diseases).

Bottom level nodes 446 are observables, symptoms or metrics which are dependent on the model and well conditions or the outcome of tests that can be applied to further resolve the Process Model parameters and range of variations (Diagnostic Tests, Symptoms).

Fig. 20 shows a grouping of the various nodes that could be used to represent the values 822 in the process, model 824 and metrics 826.

The probabilistic graphical model for the agent comprises two main components: a mapping of the possible range of process metrics and probability tables of the likelihood that the process model parameter has changed.

The first component is a mapping of the possible range of process metrics that would result from the range of process variables and process model parameters. This mapping may be of absolute values or deviations from nominal values for variables or parameters as required. In essence for a given instance or range of process variables and a specific instance of the model parameters and the metrics would be determined based on the model. It is possible that some or all of the variables, parameters or metrics could be represented as discrete ranges or continuous distributions and determined through an exhaustive iteration of the model for all values. Alternatively, the mapping could be based on the causality between the various variables and process model as opposed to a dependencies completely derived via machine learning and exhaustive simulation of the process over the range of possible variables and parameters.

The second component includes probability table(s) or distribution(s) of the likelihood that the process model parameter has changed since the last historical record was taken. This could be based on historical data but also include calculations. One example of a calculation would be the likelihood of a fluid level change based on the possible range of fluid volume produced given the time between current and historical records.

With reference to Fig. 21 that illustrating a process model learned sensitivity with a learned structure, mapping and likelihood of change are combined and learning the structure provides a causal PGM.

For a given set of process variables 822 and metrics 826, the PGM identifies the most probable model parameter 824 to have changed and trigger specific numerical methods to derive the exact values required to correctly tune the model. The PGM and associated "tuning" algorithms are able to operate in situations where multiple model parameters may have changed. This may involve iterating the predictive model with actual or historical results to converge on revised process parameters.

It is also possible that the agents would initiate or request supplemental tests so that the source of the deviations can be diagnosed and validated.

The goal is to efficiently and automatically tune the model as the process is running in the background. The IA may also utilize real time data as part of the effort to validate the tuning before locking in the revised parameters. The specific process parameter(s) that have changed would be quantified and validated using the process model(s) and real time data and referred to the AI Manager 152 for updating process parameter and probability tables for all related lAs.

The agent described herein is not intended to be directly in the control loop. It may also act as resource manager to queue other agents to initiate an investigation into higher level well operations and conditions by determining the source of deviations is not likely to be related to variation in the process model parameters.

In the case of the pumpjack, operation, using a variable intra-stroke speed may require a different PGM than that of the fixed intra-stroke speed as the variation of the speed adds significant complexity and can greatly affect the metrics and learned structure to identify and correct process model parameters. This increased complexity also greatly increases the degree to which the process can be optimized and the value added of the overall method and apparatus.

### Model Configuration

Certain data pertaining to the well "completion" is known. That being said, in the course of operation, the initial model will be validated against the configuration information provided. This would pertain to the type of equipment installed and its specific configuration. The configuration information is likely to change during operation. Such information in the cyclic pump controller context includes:
- Rod string types, lengths, properties and placements within overall rod string
- Pumpjack type, geometry, gear ratios, operating limits
- Downhole pump, type, dimensions, operating limits, other info
- Tubing type and anchors
- Orientation and deflections of well as drilled
- Other equipment downhole or on the surface that could impact dynamic model performance
- Rod scrappers, spacers, and the like
- Process variables
- Process variable can include but may not be limited to:
- Pump speed and position
- Gas pressure in the casing and in the tubing
- Temperature(s) at surface: ambient, flowline
- Actual production.

### Process Model Parameters

There will be information on the fluid being produced. These values may change gradually with time and production rates.
- Fluid Level in the casing and in the tubing
- Fluid Density, Viscosity (static and dynamic)

These values will change with depth/pressure, temperature, % of oil, water gas or other fluids (i.e. water cut).

### Process Metrics

There will be other information on the status of the well and downhole conditions. Some of this information can be measured, calculated or inferred/approximated based on the information on well configuration, direct measurements or other conditions in if known.
- Surface and Downhole load measurements with respect to time and/or position in the pump stroke
- Temperature downhole and gradient to the surface
- Static rod loads downhole and gradient to the surface
- Relative and absolute contributions of Fluid weight, friction, etc to surface and downhole card, and
- Operator input or manual tests may be requested.

### Control Strategy Agents

The primary role of a Control Strategy Agent 162 is to evaluate & recommends appropriate control action based on diagnostic results and input from Optimization and Diagnostic Agent(s) 160 and 154. It typically uses using a probabilistic decision net that takes into account the risk associated with control action. Fig. 22 shows the detail of the Control Strategy Agent 162. As shown, the Control Strategy Agent 162 comprises a Bayesian network 852, which uses an optimization guidance 858 and a plurality of input parameters 854 obtained using suitable methods to conduct agent specific tests 856. The Bayesian network 852 generates a plurality of outputs 860 for the AI Manager 152. The outputs 860 of the Control Strategy Agent 162 are also fed to the pump controller 166 for modifying the pumpjack operation process.

### Control Strategy Agent Example: Pumpoff Agent for Downhole Observer model of Sucker Rod Pump

The Control Strategy Agent 162 monitors and identifies variations from normal operation & recommends appropriate control action based on information from Diagnostic Agents 154 and other Agent(s). Actions may include Off/On direction 860 or adjustment of pumpoff cycle parameters 860 such as the on and off durations.

For example, gas interference may result in some fluid pound that may or not be within allowable rod stress limits. A Fatigue Monitoring Agent (not shown) will quantify the fatigue being experienced by the rod string and its impact on the MTBF. The persistence of the conditions, the severity and external conditions may dictate singular or multiple courses of actions. In the event of multiple courses of action or condition that have not been previously encountered, the Control Strategy Agent 162 may trigger an Optimization Agent 160 to access and recommend the best strategy.

The severity of the fatigue, probability of failure, cost of repair, control options to reduce fatigue and the opportunity cost of lost production or the value of increased production would factored into a PGN decision net based on risk and opportunity to evaluate the course of action. A possible configuration for a PGN is shown in Figure 23. This agent integrates the results of the various Diagnostic Agents 154 and makes control direction decisions. It may also alert the operator to design issues or potential mitigants such as reducing the pumping speed. The Control Strategy Agent 162 is a learning agent for learning the best control action for various conditions from the recommendation of Optimization Agent 160 and the success of earlier recommendations.

### Optimization Agents

The Optimization Agent 160 utlizes a PGM to identify an optimization strategy for determining the control actions for adjusting the process, identify numerical search regions of parameters to be optimized according to the optimization strategy; and conduct a numerical optimization to search for the global or best fit local optimum of the parameters. Fig. 24 shows the detail of the Optimization Agent 160. As shown, the Optimization Agent 160 comprises a Bayesian network 882, which uses a plurality of input parameters 884 obtained using suitable methods to conduct agent specific tests 886 and optional tests 888. The Bayesian network 882 generates a plurality of outputs 890 for the AI Manager 152. The Optimization Agent 160 also maintains data of production potential 892 and an optimization guidance 894.

A role of an Optimization Agent 160 is to use models and calculated parameters to evaluate potential optimization strategies and provide guidance. The Agent 160 typically uses a probabilistic decision net that takes into account opportunity or the risk associated with different optimization strategies action.

Additionally, a process simulation can be utilized to map exhaustively, or selectively, the process response to process variables, their range of operation and potential deviations such that changes to a process can be determined probabilistically and represented as PGN, potentially via machine learning techniques. When combined with historical observations of the process, this enables a means of process optimization that is highly deterministic in nature without exhaustive simulations and/or numerical methods in real time.

Using machine learning techniques, process responses such as energy consumption or production output could be represented in a PGN and used to provide guidance to a numerical optimization means. The guidance could encompass identifying compact numerical search regions of operating parameters to be optimized, for the numerical search to converge on an optimal solution, being the global optimum or a best fit local optimum in the numerical search regions, for the operating parameters, or in the event of a process with high levels of certainty, provide the optimal operating parameters directly to control. In an alternate embodiment, the process variables could be represented as Fourier series or other approximation means and a probabilistic mapping of the global responses of the process could be generated as a function of these Fourier coefficients. This provides a unique advantage over other optimization methods as it can greatly reduce the time required to determine a local or a global optimum for the process in real time.

The probabilistic mapping of the process could be computed in the background of a processor controlling the process or on a separate processor which could also utilize parallel computing methods to reduce the elapsed time, and generate the probability tables for the optimization PGN.

In the case of oil well pumping system, local or global optimizations of complex intrastroke variations of pump prime mover speed to optimize the well such as those of US 6,890,156 to Watson (pumpjack speed profiling), the content of which is incorporated herein by reference in its entity, could be performed with significantly reduced computation compared to other numerical optimization means.
- Uses process models and calculated parameters in conjunction with numerical or iterative methods to evaluate potential optimization strategies and provide guidance. Operates asynchronously after being triggered.
- For example, in the sucker rod pump application controlled by a fixed speed motor, the agent may use statistical or cumulative pump fillage and run time to establish well inflow rates and utilize these to determine optimal pump on and off cycles to maximize production based on acceptable fatigue limits to the sucker rod string and/or provide guidance for setting the optimal strokes per minute to operate the pump. It may identify situations where a control strategy such as PumpOff may or may not be used based on multiple conditions including but limited to production and energy requirements, energy savings, fatigue, external temperatures that may impact performance such as freezing of lines during winter, etc.
- In a sucker rod pump application where the motor speed is variable over multiple cycles via a variable speed or variable frequency drive it may direct the Control Agent to vary the speed of the drive.
- In a sucker rod pump application where the motor speed is variable within the stroke such as that of (Watson patent US 6,890,156), different speed profiles may be determined based on the process model, pre-determined speed profiles initiated or adjusted and provided to the Control Strategy Agent 162 for implementation.

Those skilled in the art appreciate that other embodiments are readily available. For example, in an alternative embodiment, a control system for controlling a process comprising: at least one processor; at least one sensor coupled to the at least one processor; and a storage coupled with and readable by the at least one processor and storing a set of instructions which, when executed by the at least one processor, cause the processor to perform actions comprising: receiving, from the at least one sensor, real time process data generated by the process; comparing against a predictive objective function and/or a historical mean and/or a predicted operational envelope and/or a predetermined static function for establishing any deviation from normal operation; applying probabilistic modeling at a status agent for classifying the source and likely cause of the deviation; prioritizing actuation of at least one or more diagnostic agents related to causality of the deviation at a supervisory manager; communicating the results of the diagnostic agents to the supervisory manager; modifying the probabilistic model of the status agent from the results from the one or more diagnostic agents; and applying a probabilistic model at a control agent for evaluating risk and recommending appropriate control action to the process.

In another embodiment, a computer-readable storage device is provided comprising computer-executable instructions for controlling a process, wherein the instructions, when executed, cause a processor to perform actions comprising: receiving, from the at least one sensor, real time process data generated by the process; comparing against a predictive objective function and/or a historical mean and/or a predicted operational envelope and/or a predetermined static function for establishing any deviation from normal operation; applying probabilistic modeling at a status agent for classifying the source and likely cause of the deviation; prioritizing actuation of at least one or more diagnostic agents related to causality of the deviation at a supervisory manager; communicating the results of the diagnostic agents to the supervisory manager; modifying the probabilistic model of the status agent from the results from the one or more diagnostic agents; and applying a probabilistic model at a control agent for evaluating risk and recommending appropriate control action to the process.

### Supervisory Control and Data Acquisition (SCADA) Manager

In an alternative embodiment, a plurality of the above-described systems 100, which may be distributed in the same jobsite or different jobsites, are interconnected via suitable means and form a large control system. Such a large control system may further comprise a SCADA Manager, which may incorporate AI Manager functionality of each system 100 within its domain or incorporate additional methods or agents, which in the context of an oil field, monitors field scale parameters and their effects at the individual wells.

The SCADA Manager may utilize the probability tables or historical data from individual wells to update the probability tables of other wells or provide these wells historical case information to enable the wells to utilize machine learning techniques to update their own probability tables.

Further, in applications with distributed, independent processes, such an oil field, the AI Manager at each individual well may network or coordinate with other AI Managers at other wells to share learned diagnoses or control strategies either directly or via a central SCADA manager.

For example, multiple applications of the system 100 can be made to work collaboratively, such as in the case of an oil field, where each well would have an AIMC system which also shares knowledge and learning with other wells and with higher level systems such as an intelligent field manager or SCADA system. Even wells not on the same pad can benefit as the sell data, pump dyna cards and patterns can be normalized. The knowledge can be shared by updating the probability tables within the PGNs; using the case histories of other wells to train the PGNs at other wells using other machine learning techniques, or through sharing of learned process parameters or patterns observed in process data. The SCADA may also provide control direction based on the data and knowledge the SCADA receives collectively from the individual wells.

### Other Applications

Although in above embodiments the AIMC system 100 is described generally and in the context of a sucker rod pump controller for oil wells for controlling and optimizing the operation thereof. Those of skill in the art will understand that AIMC systems, based upon the embodiments taught herein, are in no way limited only for controlling a sucker rod pump, but can be customized for use in any number of different types of dynamic processes in a wide variety of industries.

The system and methodology described herein, both generally and in the specific context of a pumpjack, are also applicable to a wide variety of other processed such as Steam Methane Reformer, Boiler, Heat Treatment Furnace, Water Treatment, Compressor Skid/System, and medical systems. It is recognized that the technology disclosed herein could be applied to a variety of other processes where a process model can be utilized to ensure the optimal operation of the system from a production, maintenance and economic viewpoint.

In some additional detail for a couple of other scenarios, the nature of such other processes and the role of the Agents is described as follows.

### Model Predictive Controller

Model predictive control techniques typically require the nature of disturbances to be known in advance in order to provide control direction to bring the process back within its normal operating envelope. They also require the parameters of the model to be accurately tuned such that inputs to the model generate accurate and relevant outputs. Such applications require significant upkeep by highly skilled and knowledgeable individuals unless they are highly stable. In a batch process application with a model predictive controller, the roles implemented for the agents is similar roles to that in the oil well pumpjack application except that control action is more limited as it is relegated to the model predictive controller. The roles of the agents include The Data and Modeling Agent 158, the Status Agent 156, AI Manager 152, various Diagnostic Agents 154 wherein the AI Manager 152 will compares the probabilities of the various Diagnostic Agents154 and updates the Status Agent 156 of the diagnosis of high certainty or initiated additional tests if the level of uncertainty is too high to differentiate a likely cause. The AI Manager 152 may also initiate the Model/Parameter Tuning Agent 168 based on the output of the Diagnostic Agents 154.

The Control Strategy Agent 162 assesses opportunity and/or risk based on the probability of one or more diagnosis and recommends a change of model or control action to the model predictive controller based on the opportunity/risk analysis.

### Compressor Skid / System

Compressor skids are representative of a typical packaged system that is designed to perform a task of a narrow range, in this case the compression of gases to feed into a process or the compression of gases taken from a process to maintain a vacuum. The later can be found on oil wells where the casing pressure is reduced below atmospheric pressure to increase well inflow.

These applications are typical fluid and thermodynamic process where the pumps, valves and process operation are sized for a specific operation and readily modelled. Equipment failure, process disturbances and operational limits account for much of the variation in the process.

Again the roles are very similar to that of the oil well pumpjack application, with the primary change being the process model, the operational states tracked by the Status Agent and the nature of Diagnostic Agents which are process specific. In this case, monitoring the commanded versus actual pressures, flow and temperature of the process to establish probabilities. Depending on the risk and safety implications, the controller may be utilized to conduct actual tests by making small changes to process setpoints and verifying the disturbances and resulting control actions are indicative of proper operation to further isolate the source of process disturbances.

The process the skid is controlling may also be modelled enabling a broader range of scope for the AIMC.

### Other Process Systems

The application into other processes, such as furnaces, or boilers, compressors or a collection of processes which are combined into complex systems such as steam reformers or refineries; do not fundamentally change how basic operation of the AIMC and its agents. As the system is designed to operate under uncertain conditions, the scope of control action may be restricted based on the safety and risk tolerance. Much of this can be handled by the preferred implementation which is to have the AIMC make control recommendations to a standard industrial controller which incorporates the necessary safety interlocks and permissives to ensure safe operation in all circumstances.

The design and configuration of the AI can change depending upon the industrial application or context for which it is being used, the system possibly requiring a different number and design of functional agents, such as Diagnostic and Control Strategy Agents.

Although in above embodiments, the system 100 comprises one Status Agent 156, in an alternative embodiment, the system 100 may comprises a plurality of Status Agents 156.

In some alternative embodiments, the control system 100 may be implemented in a scalable manner such that computation can be distributed to addition processors, whether local or remote on embedded or PC computation platforms.

Such a control system 100 can further connect to existing or proprietary controller networks to access and monitor process data and perform diagnostic and optimization tasks. This enables the technology described herein to be integrated into existing or custom engineered systems and OEM products. Alternatively the AIMC system can incorporate digital or analog inputs (I/O) of its own in addition to accessing existing controllers or remote I/O modules. In one implementation, control direction is provided to industrial controllers that provide monitoring of I/O and provide the basic control operation with independent safety interlocks and permissives that are typical of that process.

Those skilled in the art appreciate that each of the above-described agents can operate individually as separate agents, or alternatively, as a sub-agent of an encompassing agent. For example, in one embodiment, the one or more Diagnostic Agents are sub-agents of an encompassing Diagnostic Agent.

Although in above embodiments, the AIMC system 100 comprises a Model/Parameter Tuning Agent 168. In an alternative embodiment, the function of the Model/Parameter Tuning Agent 168 is implemented in the Data and Modeling Agent 158 and thus the AIMC system 100 does not comprise any Model/Parameter Tuning Agent 168.

In an alternative embodiment, the function of the Model/Parameter Tuning Agent 168 and the Data and Modeling Agent 158 is implemented in the AI Manager 152 and thus the AIMC system 100 does not comprise any Model/Parameter Tuning Agent 168 nor any Data and Modeling Agent 158.

Although in above embodiments, the AIMC system 100 comprises a plurality of lAs, in an alternative embodiment, the AIMC system 100 is implemented without using any agents. Rather, the AIMC system 100 in this embodiment is implemented using traditional programming methods.

## Claims

1. A method of controlling a process of at least one device (114), the method comprising:
receiving real time process data generated from the process;
processing the real time process data, and comparing the processed data against at least one reference of a process model of the process for establishing any deviation from normal operation;
**characterised by** further performing in real time:
classifying, at a status agent (156), a source of the deviation and one or more likely causes of the deviation;
prioritizing actuation of one or more diagnostic agents (154) related to the causality of the deviation at a supervisory manager (152);
actuating the one or more diagnostic agents (154);
communicating the results of the diagnostic agents (154) to the supervisory manager (152);
modifying, under the instruction of the supervisory manager (152), the process model based on the results of the one or more diagnostic agents (154), if the source of the deviation is the process model; and
applying, under the instruction of the supervisory manager (152), the modified process model at a control agent (162) for evaluating risk and recommending and initiating at least one control action to control the process of the at least one device (114).

2. The method of claim 1 wherein the prioritizing actuation of one or more diagnostic agents (154) further comprises:
pattern matching to perform a probabilistic match to known patterns; and
classifying which of the one or more diagnostic agents are initially activated.

3. The method of claim 1 or 2, wherein the supervisory manager (152) initiates a model tuning agent (168) based on the output of the diagnostic agents (154).

4. The method of claim 3, wherein the model tuning agent (168) initiates and prioritizes numerical or iterative methods with the process model to identify and quantify the possible contributions to the deviations.

5. The method of any of claims 1 to 4 wherein at least one agent employs a Probabilistic Graphical Network.

6. The method of claim 1 further comprising, after modifying the process model:
re-processing the real time process data, and comparing the re-processed data against at least one reference of the modified process model for establishing any deviation from normal operation;
classifying, at the status agent (156), a source of the deviation and one or more likely causes of the deviation;
prioritizing actuation of one or more additional diagnostic agents (154) related to the causality of the deviation at the supervisory manager (152);
actuating the one or more additional diagnostic agents (154);
communicating the results of the additional diagnostic agents (154) to the supervisory manager (152); and
modifying, under the instruction of the supervisory manager (152), the process model based on the results of the one or more additional diagnostic agents (154), if the source of the deviation is the process model.

7. The method of any of claims 1 to 6 further comprising:
prioritizing actuation of one or more additional diagnostic agents (154) if the level of uncertainty is too high to differentiate a likely cause of the deviation.

8. The method of any of claims 1 to 7 wherein said classifying a source of the deviation and one or more likely causes of the deviation comprises:
applying probabilistic modeling at the status agent (156) for classifying a source of the deviation and one or more likely causes of the deviation.

9. The method of any of claims 1 to 8 wherein the at least one reference of the process model comprises at least one of a predictive objective function and/or a historical mean and/or a predicted operational envelope and/or a predetermined static function.

10. A system for controlling a process of at least one device (114) in the system, said system comprising:
a plurality of sensors (106) for collecting data of the process;
a status agent (156) for monitoring the status of the system based on data collected from the sensors (106);
at least one diagnostic agent (154) for diagnosing at least a portion of the system and collecting diagnostic data from the sensors (106) to identify deviation from normal operation;
a control agent (162) for performing control actions to the process; and
a supervisory manager (152) coupled to the status agent (156), the at least one diagnostic agent (154) and the control agent (162);
wherein the system is configured to:
receive real time process data generated from the process; and
compare the real time process data against at least one of a predictive objective function, a historical mean, a predicted operational envelope, and a predetermined static function of a process model of the process, for establishing any deviation from normal operation;
**characterised in that** the system is further configured to in real time:
classify, at the status agent (156), a source of the deviation and one or more likely causes of the deviation;
prioritize actuation of the at least one diagnostic agent (154) related to causality of the deviation;
modify the process model based on the results of the at least one diagnostic agent (154), if the source of the deviation is the process model; and
apply the modified process model at the control agent (162) for evaluating risk and recommending appropriate control action to control the process of the at least one device (114).

11. The system of claim 10 wherein the system is further configured to:
recommend at least one control action to the process.

12. The system of claim 10 or 11 wherein each of the agents can operate individually as a separate agent, or as a sub-agent of an encompassing agent.

13. The system of claim 10, 11 or 12, wherein the at least one device (114) comprises at least one of sucker rod pump, pumpjack, steam methane reformer, boiler, heat treatment furnace, water treatment equipment, and compressor skid.

14. The system of any of claims 10 to 13 wherein said classifying a source of the deviation and one or more likely causes of the deviation comprises:
applying probabilistic modeling at the status agent (156) for classifying the source of the deviation and the one or more likely causes of the deviation.

15. The system of any of claims 10 to 14 wherein at least one agent employs a Probabilistic Graphical Network.

## Patentansprüche

1. Verfahren zum Steuern eines Prozesses mit mindestens einer Einrichtung (114), wobei das Verfahren Folgendes umfasst:
Empfangen von Echtzeit-Prozessdaten, die von dem Prozess erzeugt werden;
Verarbeiten der Echtzeit-Prozessdaten und Vergleichen der verarbeiteten Daten mit mindestens einer Referenz eines Prozessmodells des Prozesses, um irgendeine Abweichung vom Normalbetrieb zu bestimmen;
**dadurch gekennzeichnet, dass** ferner Folgendes in Echtzeit durchgeführt wird:
Klassifizieren, an einem Statusagenten (156), einer Quelle der Abweichung und einer oder mehrerer wahrscheinlicher Ursachen der Abweichung; Priorisieren einer Betätigung eines oder mehrerer Diagnoseagenten (154) bezüglich der Kausalität der Abweichung an einem Überwachungsmanager (152);
Betätigen des einen oder der mehreren Diagnoseagenten (154);
Kommunizieren der Ergebnisse der Diagnoseagenten (154) zu dem Überwachungsmanager (152);
Modifizieren, unter Anleitung des Überwachungsmanagers (152), des Prozessmodells basierend auf den Ergebnissen des einen oder der mehreren Diagnoseagenten (154), falls die Quelle der Abweichung das Prozessmodell ist; und
Anwenden, unter Anleitung des Überwachungsmanagers (152), des modifizierten Prozessmodells an einem Steueragenten (162) zum Evaluieren des Risikos und Empfehlen und Initiieren von mindestens einer Steuerhandlung zum Steuern des Prozesses der mindestens einen Einrichtung (114).

2. Verfahren nach Anspruch 1, wobei das Priorisieren einer Betätigung eines oder mehrerer Diagnoseagenten (154) ferner Folgendes umfasst:
Musterabgleich zum Durchführen eines probabilistischen Abgleichs zu bekannten Mustern; und
Klassifizieren, welche des einen oder der mehreren Diagnoseagenten anfänglich aktiviert werden.

3. Verfahren nach Anspruch 1 oder 2, wobei der Überwachungsmanager (152) einen Modellabstimmungsagenten (168) basierend auf der Ausgabe der Diagnoseagenten (154) initiiert.

4. Verfahren nach Anspruch 3, wobei der Modellabstimmungsagent (168) numerische oder iterative Verfahren mit dem Prozessmodell initiiert und priorisiert, um die möglichen Beiträge zu den Abweichungen zu identifizieren und zu quantifizieren.

5. Verfahren nach einem der Ansprüche 1 bis 4, wobei mindestens ein Agent ein probabilistisches graphisches Netzwerk einsetzt.

6. Verfahren nach Anspruch 1, ferner umfassend, nach dem Modifizieren des Prozessmodells:
Neuverarbeiten der Echtzeit-Prozessdaten und Vergleichen der neu verarbeiteten Daten mit mindestens einer Referenz des modifizierten Prozessmodells, um irgendeine Abweichung vom Normalbetrieb zu bestimmen;
Klassifizieren, an dem Statusagenten (156), einer Quelle der Abweichung und einer oder mehrerer wahrscheinlicher Ursachen der Abweichung;
Priorisieren einer Betätigung eines oder mehrerer zusätzlicher Diagnoseagenten (154) bezüglich der Kausalität der Abweichung an dem Überwachungsmanager (152);
Betätigen des einen oder der mehreren zusätzlichen Diagnoseagenten (154);
Kommunizieren der Ergebnisse der zusätzlichen Diagnoseagenten (154) zu dem Überwachungsmanager (152); und
Modifizieren, unter Anleitung des Überwachungsmanagers (152), des Prozessmodells basierend auf den Ergebnissen des einen oder der mehreren zusätzlichen Diagnoseagenten (154), falls die Quelle der Abweichung das Prozessmodell ist.

7. Verfahren nach einem der Ansprüche 1 bis 6, ferner umfassend:
Priorisieren einer Betätigung eines oder mehrerer zusätzlicher Diagnoseagenten (154), falls der Unsicherheitsgrad zu hoch ist, um eine wahrscheinliche Ursache der Abweichung zu differenzieren.

8. Verfahren nach einem der Ansprüche 1 bis 7, wobei das Klassifizieren einer Quelle der Abweichung und einer oder mehrerer wahrscheinlicher Ursachen der Abweichung Folgendes umfasst:
Anwenden einer probabilistischen Modellierung an dem Statusagenten (156) zum Klassifizieren einer Quelle der Abweichung und einer oder mehrerer wahrscheinlicher Ursachen der Abweichung.

9. Verfahren nach einem der Ansprüche 1 bis 8, wobei die mindestens eine Referenz des Prozessmodells eine prädiktive Zielfunktion und/oder einen historischen Mittelwert und/oder einen vorhergesagten Betriebsbereich und/oder eine vorbestimmte statische Funktion umfasst.

10. System zum Steuern eines Prozesses mit mindestens einer Einrichtung (114) im System, wobei das System Folgendes umfasst:
mehrere Sensoren (106) zum Sammeln von Daten des Prozesses;
einen Statusagenten (156) zum Überwachen des Status des Systems basierend auf Daten, die von den Sensoren (106) gesammelt werden;
mindestens einen Diagnoseagenten (154) zum Diagnostizieren von mindestens einem Teil des Systems und Sammeln von Diagnosedaten von den Sensoren (106), um eine Abweichung vom Normalbetrieb zu identifizieren;
einen Steueragenten (162) zum Durchführen von Steuerhandlungen am Prozess; und
einen Überwachungsmanager (152), der mit dem Statusagenten (156), dem mindestens einen Diagnoseagenten (154) und dem Steueragenten (162) gekoppelt ist;
wobei das System ausgelegt ist zum:
Empfangen von Echtzeit-Prozessdaten, die von dem Prozess erzeugt werden; und
Vergleichen der Echtzeit-Prozessdaten mit einer prädiktiven Zielfunktion und/oder einem historischen Mittelwert und/oder einem vorhergesagten Betriebsbereich und/oder einer vorbestimmten statischen Funktion eines Prozessmodells des Prozesses, um irgendeine Abweichung vom Normalbetrieb zu bestimmen;
**dadurch gekennzeichnet, dass** das System in Echtzeit ferner ausgelegt ist zum:
Klassifizieren, an dem Statusagenten (156), einer Quelle der Abweichung und einer oder mehrerer wahrscheinlicher Ursachen der Abweichung;
Priorisieren einer Betätigung des mindestens einen Diagnoseagenten (154) bezüglich der Kausalität der Abweichung;
Modifizieren des Prozessmodells basierend auf den Ergebnissen des mindestens einen Diagnoseagenten (154), falls die Quelle der Abweichung das Prozessmodell ist; und
Anwenden des modifizierten Prozessmodells an dem Steueragenten (162) zum Evaluieren des Risikos und Empfehlen einer geeigneten Steuerhandlung zum Steuern des Prozesses der mindestens einen Einrichtung (114).

11. System nach Anspruch 10, wobei das System ferner ausgelegt ist zum:
Empfehlen von mindestens einer Steuerhandlung für den Prozess.

12. System nach Anspruch 10 oder 11, wobei jeder der Agenten individuell als ein separater Agent oder als ein Unteragent eines umgreifenden Agenten arbeiten kann.

13. System nach Anspruch 10, 11 oder 12, wobei die mindestens eine Einrichtung (114) eine Pferdekopfpumpe und/oder eine Tiefpumpe und/oder einen Dampf-Methan-Reformer und/oder einen Dampfkessel und/oder einen Wärmebehandlungsofen und/oder eine Wasseraufbereitungsanlage und/oder ein Kompressorskid umfasst.

14. System nach einem der Ansprüche 10 bis 13, wobei das Klassifizieren einer Quelle der Abweichung und einer oder mehrerer wahrscheinlicher Ursachen der Abweichung Folgendes umfasst:
Anwenden einer probabilistischen Modellierung an dem Statusagenten (156) zum Klassifizieren der Quelle der Abweichung und der einen oder der mehreren wahrscheinlichen Ursachen der Abweichung.

15. System nach einem der Ansprüche 10 bis 14, wobei mindestens ein Agent ein probabilistisches graphisches Netzwerk einsetzt.

## Revendications

1. Procédé de contrôle d'un processus d'au moins un dispositif (114), le procédé comprenant les étapes consistant à :
recevoir des données de processus en temps réel générées à partir du processus ;
traiter les données de processus en temps réel, et comparer les données traitées à au moins une référence d'un modèle de processus du processus pour établir tout écart par rapport au fonctionnement normal ;
**caractérisé en ce qu'**il exécute en outre en temps réel les étapes consistant à :
classer, au niveau d'un agent d'état (156), une source de l'écart et une ou plusieurs causes probables de l'écart ;
donner la priorité à l'activation d'un ou plusieurs agents de diagnostic (154) en relation avec la causalité de l'écart au niveau d'un responsable de la supervision (152) ;
activer le ou les agents de diagnostic (154) ;
communiquer les résultats des agents de diagnostic (154) au responsable de la supervision (152) ;
modifier, selon l'instruction du responsable de la supervision (152), le modèle de processus sur la base des résultats du ou des agents de diagnostic (154), si la source de l'écart est le modèle de processus ; et
appliquer, sous l'instruction du responsable de la supervision (152), le modèle de processus modifié au niveau d'un agent de contrôle (162) pour évaluer le risque et recommander et lancer au moins une action de contrôle pour contrôler le processus du ou des dispositifs (114).

2. Procédé selon la revendication 1, dans lequel l'étape consistant à donner la priorité à l'activation d'un ou de plusieurs agents de diagnostic (154) comprend en outre les étapes consistant à :
faire correspondre un modèle pour effectuer une correspondance probabiliste avec des modèles connus ; et
classer lequel du ou des agents de diagnostic est activé initialement.

3. Procédé selon la revendication 1 ou 2, dans lequel le responsable de la supervision (152) lance un agent de réglage de modèle (168) sur la base de la sortie des agents de diagnostic (154).

4. Procédé selon la revendication 3, dans lequel l'agent de réglage de modèle (168) lance et donne la priorité à des méthodes numériques ou itératives avec le modèle de processus pour identifier et quantifier les contributions possibles aux écarts.

5. Procédé selon l'une quelconque des revendications 1 à 4, dans lequel au moins un agent utilise un réseau graphique probabiliste.

6. Procédé selon la revendication 1, comprenant en outre, après la modification du modèle de processus, les étapes consistant à :
retraiter les données de processus en temps réel et comparer les données retraitées à au moins une référence du modèle de processus modifié pour établir tout écart par rapport au fonctionnement normal ;
classer, au niveau de l'agent d'état (156), une source de l'écart et une ou plusieurs causes probables de l'écart ;
donner la priorité à l'activation d'un ou plusieurs agents de diagnostic supplémentaires (154) en relation avec la causalité de l'écart au niveau du responsable de la supervision (152) ;
activer le ou les agents de diagnostic supplémentaires (154) ;
communiquer les résultats des agents de diagnostic supplémentaires (154) au responsable de la supervision (152) ;
modifier, selon l'instruction du responsable de la supervision (152), le modèle de processus sur la base des résultats du ou des agents de diagnostic supplémentaires (154), si la source de l'écart est le modèle de processus.

7. Procédé selon l'une quelconque des revendications 1 à 6, comprenant en outre l'étape consistant à :
donner la priorité à l'activation d'un ou de plusieurs agents de diagnostic supplémentaires (154) si le niveau d'incertitude est trop élevé pour différencier une cause probable de l'écart.

8. Procédé selon l'une quelconque des revendications 1 à 7, dans lequel ladite classification d'une source de l'écart et d'une ou plusieurs causes probables de l'écart comprend l'étape consistant à :
appliquer une modélisation probabiliste au niveau de l'agent d'état (156) pour classer une source de l'écart et une ou plusieurs causes probables de l'écart.

9. Procédé selon l'une quelconque des revendications 1 à 8, dans lequel la ou les références du modèle de processus comprennent au moins l'une parmi une fonction objective de prédiction et/ou une moyenne historique et/ou une enveloppe opérationnelle prédite et/ou une fonction statique prédéterminée.

10. Système pour le contrôle d'un processus d'au moins un dispositif (114) dans le système, ledit système comprenant :
une pluralité de capteurs (106) pour recueillir des données du processus ;
un agent d'état (156) pour surveiller l'état du système sur la base de données recueillies depuis les capteurs (106) ;
au moins un agent de diagnostic (154) pour diagnostiquer au moins une partie du système et recueillir des données de diagnostic depuis les capteurs (106) pour identifier un écart par rapport au fonctionnement normal ;
un agent de contrôle (162) pour effectuer des actions de contrôle sur le processus ; et
un responsable de la supervision (152) couplé à l'agent d'état (156), à l'agent ou aux agents de diagnostic (154) et à l'agent de contrôle (162) ;
dans lequel le système est configuré pour :
recevoir des données de processus en temps réel générées à partir du processus ; et
comparer les données de processus en temps réel à au moins l'une parmi une fonction objective de prédiction, une moyenne historique, une enveloppe opérationnelle prédite et une fonction statique prédéterminée d'un modèle de processus du processus, afin d'établir tout écart par rapport au fonctionnement normal ;
**caractérisé en ce que** le système est en outre configuré pour, en temps réel :
classer, au niveau de l'agent d'état (156), une source de l'écart et une ou plusieurs causes probables de l'écart ;
donner la priorité à l'activation du ou des agents de diagnostic (154) en relation avec la causalité de l'écart ;
modifier le modèle de processus en fonction des résultats du ou des agents de diagnostic (154), si la source de l'écart est le modèle de processus ; et
appliquer le modèle de processus modifié au niveau de l'agent de contrôle (162) pour évaluer le risque et recommander l'action de contrôle appropriée pour contrôler le processus du ou des dispositifs (114).

11. Système selon la revendication 10, dans lequel le système est en outre configuré pour : recommander au moins une action de contrôle au processus.

12. Système selon la revendication 10 ou 11, dans lequel chacun des agents peut fonctionner individuellement en tant qu'agent séparé ou en tant que sous-agent d'un agent global.

13. Système selon la revendication 10, 11 ou 12, dans lequel le ou les dispositifs (114) comprennent au moins un élément parmi une pompe à tige de pompage, un vérin de pompage, un régénérateur de méthane dans la vapeur, une chaudière, un four de traitement thermique, un équipement de traitement de l'eau et un patin de compresseur.

14. Système selon l'une quelconque des revendications 10 à 13, dans lequel ladite classification d'une source de l'écart et d'une ou plusieurs causes probables de l'écart comprend l'étape consistant à :
appliquer une modélisation probabiliste au niveau de l'agent d'état (156) pour classer la source de l'écart et la ou les causes probables de l'écart.

15. Système selon l'une quelconque des revendications 10 à 14, dans lequel au moins un agent utilise un réseau graphique probabiliste.
